# EUROPEAN PATENT APPLICATION

(11) **EP 4 693 590 A1**
(43) Date of publication of application: **11.02.2026**
(21) Application number: 23936357.5
(22) Date of filing: 27.09.2023
(51) Int. Cl.: H01M 10/42, H01M 10/48, H01M 10/44, H01M 50/244, H02J 7/00

(54) **BATTERY, CIRCUIT BOARD, ELECTRONIC DEVICE AND BATTERY CHARGING METHOD**

(30) Priority: 11.05.2023 CN 202310529859
(71) Applicant: Honor Device Co., Ltd., Shenzhen, Guangdong 518040 (CN)
(72) Inventor: DENG, Xutong, Shenzhen, Guangdong 518040 (CN); WANG, Feng, Shenzhen, Guangdong 518040 (CN); LI, Wenbiao, Shenzhen, Guangdong 518040 (CN)
(74) Representative: Gill Jennings & Every LLP
(86) International application number: PCT/CN2023/122212
(87) International publication number: WO 2024/230052

(57) **Abstract**

This application provides a battery, a circuit board, an electronic device, and a battery charging method, and relates to the field of electronics, to resolve a problem that when a battery is reinstalled to an electronic device after the electronic device is disassembled, charging of the battery by the electronic device degrades a charging effect of a new battery or has a risk of damaging an old battery. The battery includes a battery core and a protection board. The protection board includes a state feature circuit. The state feature circuit is coupled to a positive electrode of the battery core, and further coupled to a circuit board. The state feature circuit is configured to: based on a positive electrode signal provided by the positive electrode of the battery core, output a first state feature signal to the circuit board when the state feature circuit is in a first state, or output a second state feature signal to the circuit board when the state feature circuit is in a second state. The state feature circuit is further configured to switch from the first state to the second state when the state feature circuit is in the first state and obtains a state switching signal provided by the state switching signal terminal.

## Description

This application claims priority to Chinese Patent Application No. 202310529859.0, filed with the China National Intellectual Property Administration on May 11, 2023, and entitled "BATTERY, CIRCUIT BOARD, ELECTRONIC DEVICE, AND BATTERY CHARGING METHOD", which is incorporated herein by reference in its entirety.

### TECHNICAL FIELD

Embodiments of this application relate to the field of electronics, and in particular, to a battery, a circuit board, an electronic device, and a battery charging method.

### BACKGROUND

To make it convenient for a user to use an electronic device anytime and anywhere, the electronic device usually has a battery for providing electric energy for running of the electronic device. A battery on an electronic device is usually a rechargeable battery. After being charged and discharged a plurality of times, a rechargeable battery has internal resistance increased. Therefore, for charging safety, when a battery with a large charging count is charged, a charging current and a charging voltage are lowered.

During repairing of an electronic device due to a failure of a component, a battery needs to be first disassembled from the electronic device, the component that fails is replaced with a new component, and then, a battery is reinstalled to the electronic device. The battery reinstalled to the electronic device may be the old battery previously used, or may be a new battery newly replaced.

If a new battery is charged by using a charging policy for an old battery, a charging effect of the new battery is degraded. If an old battery is charged by using a charging policy for a new battery, there is a risk of damaging the old battery.

Therefore, there is an urgent need for a battery charging method in which a new or old state of a battery can be identified.

### SUMMARY

Embodiments of this application provide a battery, a circuit board, an electronic device, and a battery charging method, to resolve a problem that when a battery is reinstalled to an electronic device after the electronic device is disassembled, charging of the battery by the electronic device degrades a charging effect of a new battery or has a risk of damaging an old battery.

To achieve the foregoing objective, the following technical solutions are adopted in embodiments of this application:

According to a first aspect, a battery is provided. The battery includes a battery core and a protection board. The protection board may include a board-to-board connector. The battery core may be coupled to a circuit board by the board-to-board connector, to implement signal transmission between the battery and the circuit board. The board-to-board connector may include a plurality of communication pins. The battery may communicate with the circuit board by using some or all of the communication pins. The plurality of communication pins may include an identity authentication pin, a temperature detection pin, an input/output pin, and a test pin.

The protection board includes a state feature circuit. The state feature circuit is coupled to a positive electrode of the battery core, and further coupled to a circuit board. The state feature circuit is in a first state or a second state. The state feature circuit is configured to: based on a positive electrode signal provided by the positive electrode of the battery core, output, in the first state, a first state feature signal to the circuit board, or output, in the second state, a second state feature signal to the circuit board. The state feature circuit is further coupled to a state switching signal terminal. The state feature circuit is further configured to switch from the first state to the second state when the state feature circuit is in the first state and obtains a state switching signal provided by the state switching signal terminal.

The state feature circuit is configured to indicate a new or old state of the battery. For example, that the state feature circuit is in the first state indicates that the battery is currently a new battery, and that the state feature circuit is in the second state indicates that the battery is currently an old battery.

For example, when the state feature circuit is in the first state, the state feature circuit outputs the first state feature signal based on the positive electrode signal provided by the positive electrode of the battery core. When the state feature circuit is in the second state, the state feature circuit outputs the second state feature signal based on the positive electrode signal provided by the positive electrode of the battery core.

After receiving the state feature signal, the circuit board identifies whether the state feature signal is the first state feature signal or the second state feature signal. When identifying that the state feature signal is the first state feature signal, the circuit board confirms that the battery is a new battery. When identifying that the state feature signal is the second state feature signal, the circuit board confirms that the battery is an old battery.

During power-on of the electronic device, the state switching signal terminal may output the state switching signal after the state feature circuit outputs the state feature signal.

The protection board may include the state switching signal terminal. In this way, the state feature circuit is directly coupled to the state switching signal terminal on the protection board. Alternatively, the battery may not include the state switching signal terminal, and instead, the circuit board includes the state switching signal terminal. The state feature circuit is coupled to the state switching signal terminal by a communication pin.

When receiving the state switching signal provided by the state switching signal terminal, the state feature circuit in the first state switches from the first state to the second state. When receiving the state switching signal provided by the state switching signal terminal, the state feature circuit in the second state remains in the current first state. The state feature circuit cannot switch from the second state to the first state. It may be understood that an action of state switching of the state feature circuit is irreversible.

In this way, the battery can output different state feature signals based on different states of the state feature circuit, and the circuit board on the electronic device can identify the state feature signal provided by the battery, to determine whether the battery is a new battery or an old battery, which helps the electronic device to match an accurate charging policy for charging of the battery.

In a possible implementation of the first aspect, the state feature circuit includes a fuse.

For example, a first state of the fuse is a circuit-on state before the fuse is blown, and a second state of the fuse is a circuit-off state after the fuse is blown. The fuse in the first state outputs a first state feature signal whose voltage is approximately equal to that of the positive electrode signal provided by the positive electrode of the battery core. The fuse in the second state outputs a second state feature signal of a zero voltage.

In some other implementations, the state feature circuit may further include a metal wire having a function the same as that of the fuse. The metal wire is blown when a current is large, resulting from a function the same as that of blowing the fuse. This is not limited herein.

The fuse has a characteristic of being irreversible after being blown, conforms to a characteristic of the state feature circuit, and has low costs and low purchasing difficulty.

In a possible implementation of the first aspect, the protection board may include a first resistor, and the circuit board may include a second resistor. One terminal of the first resistor may be coupled to the state feature circuit, and an other terminal of the first resistor may be coupled to the identity authentication pin. One terminal of the second resistor is coupled to the identity authentication pin, and an other end of the second resistor is coupled to a ground terminal on the circuit board. It may be understood that, the first resistor and the second resistor are coupled to each other and are connected in series between the state feature circuit 324 and the ground terminal on the circuit board.

The first resistor and the second resistor jointly form a voltage divider circuit, configured to perform voltage division on a signal output by the state feature circuit. A detection circuit may be coupled to one terminal of the second resistor, to obtain a state feature signal obtained after the voltage division of the signal output by the state feature circuit.

In this way, when a voltage detection range of the detection circuit is smaller than a voltage value of the signal output by the state feature circuit, the detection circuit that originally cannot obtain a state feature signal can obtain a state feature signal with a smaller voltage value after voltage division, and the detection circuit of the circuit board can also determine a new or old state of a battery based on the feature signal obtained after voltage division.

In another possible implementation of the first aspect, the protection board further includes a state switching circuit. The state switching circuit is coupled to the state feature circuit and a negative electrode or a ground terminal of the battery core. The state switching circuit is further coupled to the circuit board. The state switching circuit includes the state switching signal terminal, and the state switching circuit is configured to: when receiving an adjustment signal provided by the circuit board, output the state switching signal by using the state switching signal terminal.

The state switching circuit is coupled to the state feature circuit and the negative electrode of the battery core. It may be understood that, the state feature circuit and the state switching circuit are coupled to each other, and are jointly connected in series between the positive electrode of the battery core and the negative electrode of the battery core.

The state switching circuit may output the state switching signal through the state switching signal terminal, to control the state feature circuit to perform state switching. Alternatively, the state switching circuit may not output the state switching signal through the state switching signal terminal, to control the state feature circuit to remain in the state. For example, the state switching circuit outputs a state switching signal through the state switching signal terminal, to control the state feature circuit to switch the first state to the second state. Alternatively, the state switching circuit does not output the state switching signal through the state switching signal terminal, to control the state feature circuit to remain in the first state.

In this way, when a new battery supplies power during power-on of the electronic device, the state feature circuit in the first state switches from the first state to the second state under the control of the state switching signal, so that the battery changes from a new battery to an old battery.

In another possible implementation of the first aspect, the state switching circuit includes a transistor. A control electrode of the transistor is coupled to the circuit board, a first electrode of the transistor is coupled to the state feature circuit, and a second electrode of the transistor is coupled to the negative electrode or the ground terminal of the battery core.

The state switching circuit may include a fifth transistor. A control electrode of the fifth transistor may be coupled to the circuit board by a communication pin of the board-to-board connector, a first electrode of the fifth transistor may be coupled to the state feature circuit, and a second electrode of the fifth transistor may be coupled to the negative electrode (or the ground terminal) of the battery core.

When the control electrode of the fifth transistor does not receive an adjustment signal provided by an adjustment signal terminal, the fifth transistor is in an off state, and the first electrode of the fifth transistor is disconnected from the second electrode of the fifth transistor, so that the state feature circuit is isolated from the negative electrode (or the ground terminal) of the battery core. In this way, the state feature circuit in the first state may remain in the first state under the control of the fifth transistor.

When the control electrode of the fifth transistor receives the adjustment signal provided by the adjustment signal terminal, the fifth transistor is in an on state, the first electrode of the fifth transistor is connected to the second electrode of the fifth transistor, so that the state feature circuit is connected to the negative electrode (or the ground terminal) of the battery core, and uses a negative electrode signal provided by the negative electrode of the battery core (or a ground signal provided by the ground terminal) as a state switching signal. In this way, under the control of the fifth transistor, the state feature circuit in the first state may switch from the first state to the second state.

In another possible implementation of the first aspect, the protection board further includes an identity feature circuit. The identity feature circuit is coupled to the negative electrode or the ground terminal of the battery core, and the identity feature circuit is further coupled to the circuit board. The identity feature circuit is configured to output an identity signal when receiving a verification signal provided by the circuit board.

The identity feature circuit provides a unique identity signal to the circuit board, so that after receiving the identity signal, the circuit board can determine whether the identity signal provided by a current battery is the same as a historical identity signal of a battery previously assembled on the electronic device. If the identity signal provided by the current battery is the same as the historical identity signal, it may be considered that the current battery is a battery assembled before the electronic device is disassembled. If the identity signal provided by the current battery is different from the historical identity signal, it may be considered that the current battery is not a battery assembled before the electronic device is disassembled.

In a scenario in which the protection board includes both the state feature circuit and the identity feature circuit, when the identity feature circuit is coupled to the circuit board by the identity authentication pin on the board-to-board connector, the state feature circuit may not be coupled to the circuit board by the identity authentication pin, and instead, may be coupled to the detection circuit of the circuit board by another communication pin on the board-to-board connector.

It may be understood that the state feature circuit and the identity feature circuit do not share a same communication pin. When the state feature circuit and the identity feature circuit do not share a same communication pin, the circuit board may first determine a new or old state of the battery by using the state feature signal provided by the state feature circuit, and then determine, by using the identity signal provided by the identity feature circuit, whether the battery is a battery previously assembled on the electronic device. Alternatively, the circuit board may first determine, by using the identity signal provided by the identity feature circuit, whether the battery is a battery previously assembled on the electronic device, and then determine a new or old state of the battery by using the state feature signal provided by the state feature circuit. The circuit board may further determine a new or old state of the battery by using the state feature signal provided by the state feature circuit, and meanwhile, determine, by using the identity signal provided by the identity feature circuit, whether the battery is a battery previously assembled on the electronic device.

When receiving the identity signal provided by the identity feature circuit, the circuit board compares the identity signal with a historical identity signal, to obtain that the identity signal is the same as or different from the historical identity signal. If the identity signal is the same as the historical identity signal, it is determined that a battery reinstalled after the electronic device is disassembled is a previously used battery. If the identity signal is different from the historical identity signal, it is determined that a battery reinstalled after the electronic device is disassembled is a newly replaced battery.

In this way, by providing the identity signal to the circuit board, the identity feature circuit can help the electronic device to learn whether an old battery reinstalled after the electronic device is disassembled is a previously used battery, to help the electronic device to determine a charging count of the battery, and enable the electronic device to match a more accurate charging policy.

In another possible implementation of the first aspect, the identity feature circuit includes a resistor. One terminal of the resistor is configured to be coupled to the circuit board, and an other terminal of the resistor is coupled to the negative electrode or the ground terminal of the battery core.

The identity feature circuit may include a sixth resistor. One terminal of a sixth resistor is coupled to the negative electrode of the battery core, and an other terminal of the sixth resistor is coupled to a communication pin of the connector. For example, the other terminal of the sixth resistor is coupled to the identity authentication pin on the board-to-board connector.

By providing a verification signal to the sixth resistor, the circuit board enables the other terminal of the sixth resistor to have a higher voltage and output a voltage signal as an identity signal to the identity verification circuit through the identity authentication pin, to enable the identity verification circuit to determine an identity signal of the battery based on the identity signal.

In another possible implementation of the first aspect, the identity feature circuit is connected in series between the state feature circuit and the circuit board. The identity feature circuit and the state feature circuit share a same communication pin to be coupled to the circuit board.

When the state feature circuit and the identity feature circuit share an identity authentication pin, a connection relationship of the first resistor in the foregoing voltage divider circuit is the same as a connection relationship of the sixth resistor. Therefore, the sixth resistor may be reused as the first resistor.

In a stage in which the state feature circuit outputs a state feature signal and transfers the state feature signal to the detection circuit of the circuit board through the identity authentication pin, the sixth resistor and the second resistor jointly form a voltage divider circuit, to provide a state feature signal obtained after voltage division to the detection circuit of the circuit board. In a stage in which the identity feature circuit outputs an identity signal and transfers the identity signal to the identity verification circuit of the circuit board through the identity authentication pin, the sixth resistor outputs an identity signal to the circuit board.

By reusing the sixth resistor as the first resistor, a quantity of and a layout space of resistors in the protection board can be saved, and costs of the battery can also be lowered.

In another possible implementation of the first aspect, the battery includes a state switching circuit. The identity feature circuit is coupled to the state feature circuit. The state switching circuit is further configured to form a path between the identity feature circuit and the negative electrode or the ground terminal of the battery core when receiving an adjustment signal provided by the circuit board.

The state switching circuit may also be connected in series between the identity feature circuit and the negative electrode of the battery core.

When the adjustment signal terminal on the circuit board outputs an adjustment signal, and the state switching circuit receives the adjustment signal, the identity feature circuit is connected to the negative electrode (or the ground terminal) of the battery core, so that the identity feature circuit can output an identity signal to the identity verification circuit. When the adjustment signal terminal on the circuit board does not output an adjustment signal, and/or the state switching circuit does not receive an adjustment signal, the identity feature circuit is disconnected from the negative electrode (or the ground terminal) of the battery core. As a result, the identity feature circuit cannot output an identity signal to the identity verification circuit.

When the state switching circuit receives the adjustment signal, the state feature circuit is switched to the second state. Therefore, it can be ensured that the identity feature circuit outputs an identity signal when the state feature circuit is in the second state. When the state feature circuit is in the second state, the positive electrode of the battery core is disconnected from the identity feature circuit and the identity authentication pin. In this way, a positive electrode signal provided by the positive electrode of the battery core can be prevented from affecting precision of an identity signal output by the identity feature circuit in response to a verification signal, thereby improving accuracy of identity detection performed by the circuit board on the battery.

According to a second aspect, this application provides a circuit board. The circuit board includes a detection circuit, a processing chip, and a charging circuit. The detection circuit is coupled to a battery. The detection circuit is configured to: obtain a state feature signal provided by the battery, and output a first detection result indicating that the state feature signal is a first state feature signal or a second state feature signal. The processing chip is coupled to the detection circuit. The processing chip is configured to: output a first charging policy when receiving the first detection result indicating that the state feature signal is the first state feature signal, or output a second charging policy when receiving the first detection result indicating that the state feature signal is the second state feature signal. A charging voltage corresponding to the first charging policy is greater than a charging voltage corresponding to the second charging policy, and/or a charging current corresponding to the first charging policy is greater than a charging current corresponding to the second charging policy. The charging circuit is coupled to the processing chip, and further coupled to the battery. The charging circuit is configured to charge, when receiving the first charging policy provided by the processing chip, the battery based on the first charging policy; or charge, when receiving the second charging policy provided by the processing chip, the battery based on the second charging policy.

The detection circuit may be coupled to a communication pin that is on a board-to-board connector and that transmits the state feature signal. For example, the detection circuit is coupled to an identity authentication pin on the board-to-board connector. The detection circuit may detect, in a manner of converting an analog signal into a digital signal for detection, the state feature signal provided by the state feature circuit of the battery.

For example, after obtaining the state feature signal provided by the state feature circuit, the detection circuit performs analog-to-digital conversion on the state feature signal, to obtain a voltage value (a digital signal) of the state feature signal. In addition, the voltage value of the state feature signal is compared with a preset voltage threshold, to determine the state feature signal as a first state feature signal or a second state feature signal, thereby obtaining a first detection result.

The processing chip may be a system on chip on a motherboard of an electronic device. It may be understood that the circuit board may be a motherboard of an electronic device.

The processing chip may obtain the first detection result provided by the detection circuit, to determine a new or old state of the battery based on the first detection result. For example, when the processing chip obtains the first detection result indicating that the state feature signal is the first state feature signal, the processing chip determines that the battery is a new battery. When the processing chip obtains the first detection result indicating that the state feature signal is the second state feature signal, the processing chip determines that the battery is an old battery.

When determining that the battery is a new battery, the processing chip may consider that a quantity of charge-discharge cycles of the battery is 0, and then, matches the first charging policy corresponding to that the quantity of charge-discharge cycles is 0. When determining that the battery is an old battery, the processing chip may consider that a quantity of charge-discharge cycles of the battery is multiple, and then, matches the second charging policy corresponding to that the quantity of charge-discharge cycles is multiple.

The charging circuit is coupled to the battery. When a charger is inserted into the electronic device, the charging circuit is further coupled to the charger. The charger can convert mains electricity into an initial charging voltage and an initial charging current, and provide the initial charging voltage and the initial charging current to the charging circuit. After processing the initial charging voltage and the initial charging current, the charging circuit may provide a charging voltage and a charging current to the battery, to charge the battery.

When receiving the first charging policy provided by the processing chip, the charging circuit may process the initial charging voltage to obtain a first charging voltage conforming to the first charging policy. Meanwhile, the charging circuit may further process the initial charging current to obtain a first charging current conforming to the first charging policy. The charging circuit provides the first charging voltage and the first charging current to the battery, to charge the battery.

When receiving the second charging policy provided by the processing chip, the charging circuit may process the initial charging voltage to obtain a second charging voltage conforming to the second charging policy. Meanwhile, the charging circuit may further process the initial charging current to obtain a second charging current conforming to the second charging policy. The charging circuit provides the second charging voltage and the second charging current to the battery, to charge the battery.

In another possible implementation of the second aspect, the circuit board further includes an adjustment signal terminal. The adjustment signal terminal is coupled to the battery. The adjustment signal terminal is configured to output an adjustment signal to the battery.

The circuit board may further include an adjustment signal terminal. The adjustment signal terminal is configured to output an adjustment signal after the detection circuit receives the state feature signal provided by the battery.

When the state switching circuit obtains the adjustment signal provided by the adjustment signal terminal, the state switching circuit may obtain a state switching signal based on a negative electrode signal provided by the negative electrode of the battery core, and output the state switching signal through the state switching signal terminal.

In another possible implementation of the second aspect, the circuit board further includes a state switching circuit. The state switching circuit is coupled to the battery, a ground terminal, and an adjustment signal terminal separately. The state switching circuit includes a state switching signal terminal, and the state switching circuit is configured to: when receiving an adjustment signal provided by the adjustment signal terminal, obtain a state switching signal based on a ground signal provided by the ground terminal, and output the state switching signal to the battery by using the state switching signal terminal.

The state switching circuit is coupled to the ground terminal and the adjustment signal terminal on the circuit board. For example, the state switching circuit may be coupled to the ground terminal and the adjustment signal terminal by two signal traces on the circuit board.

The state switching circuit is further coupled to the battery. For example, the state switching circuit may be coupled to the state feature circuit on the battery by an input/output pin on a board-to-board connector of the battery.

When the adjustment signal terminal outputs an adjustment signal, the state switching circuit receives the adjustment signal, and connects the ground terminal on the circuit board and the state feature circuit on the battery. The ground signal provided by the ground terminal is used as a state switching signal, and the state switching signal is provided to the state feature circuit through the state switching signal terminal.

The state switching circuit on the circuit board has a same function as the state switching circuit on the battery, and differs from the state switching circuit on the battery in only a connection relationship. Details are not described herein again.

In another possible implementation of the second aspect, the circuit board further includes an identity verification circuit. The identity verification circuit is coupled to a power signal terminal and a control signal terminal, and coupled to the battery. The identity verification circuit is configured to: when receiving a control signal provided by the control signal terminal, output a verification signal to the battery based on a power signal provided by the power signal terminal. The identity verification circuit is further configured to: obtain an identity signal provided by the battery in response to the verification signal, and output a second detection result indicating that the identity signal is the same as or different from a historical identity signal.

The processing chip is further coupled to the identity verification circuit. The processing chip is further configured to: when receiving the second detection result indicating that the identity signal is the same as the historical identity signal, output the second charging policy matching a charging count corresponding to the historical identity signal.

When the state feature circuit and the identity feature circuit do not share a same communication pin, the detection circuit and the identity verification circuit on the circuit board may be respectively coupled to two communication pins. When the state feature circuit and the identity feature circuit share a same communication pin, the detection circuit and the identity verification circuit on the circuit board may be jointly coupled to a same communication pin.

The identity verification circuit may be coupled to the battery. For example, the identity verification circuit on the circuit board may be coupled to the identity feature circuit of the battery by an identity authentication pin of the board-to-board connector of the battery.

The identity verification circuit may be coupled to the power signal terminal. The identity verification circuit is further coupled to the identity feature circuit, and the identity feature circuit is coupled to the negative electrode (or the ground terminal) of the battery core. It may be understood that, the identity verification circuit is coupled to the identity feature circuit, and the identity verification circuit and the identity feature circuit are connected in series between the power signal terminal and the negative electrode (or the ground terminal) of the battery core.

When receiving a control signal provided by the control signal terminal, the identity verification circuit may connect the power signal terminal and the identity feature circuit of the battery, and provide a power signal provided by the power signal terminal as a verification signal to the identity feature circuit. When the identity feature circuit receives the verification signal, the identity feature circuit is equivalent to being connected in series between the power signal terminal and the negative electrode (or the ground terminal) of the battery core. A voltage on the identity feature circuit is used as an identity signal to be provided to the identity verification circuit on the circuit board through the board-to-board connector.

When receiving the identity signal provided by the identity feature circuit, the identity verification circuit compares the identity signal with a historical identity signal, to obtain a second detection result indicating that the identity signal is the same as or different from the historical identity signal. After obtaining the second detection result, the identity verification circuit may output the second detection result to the processing chip.

In this way, the identity verification circuit can enable, through the identity signal provided by the battery, the electronic device to learn whether an old battery reinstalled after the electronic device is disassembled is a previously used battery, to help the electronic device to determine a charging count of the battery, and enable the electronic device to match a more accurate charging policy.

In another possible implementation of the second aspect, the identity verification circuit includes a trigger sub-circuit and a detection sub-circuit. The trigger sub-circuit is coupled to the power signal terminal and the control signal terminal, and coupled to the battery. The trigger sub-circuit is configured to: when receiving a control signal provided by the control signal terminal, output a verification signal to the battery based on a power signal provided by the power signal terminal. The detection sub-circuit is coupled to the processing chip, and further coupled to the battery. The detection sub-circuit is configured to: obtain an identity signal provided by the battery in response to the verification signal, and output, to the processing chip, a second detection result indicating that the identity signal is the same as or different from a historical identity signal.

The trigger sub-circuit may be separately coupled to the power signal terminal and the control signal terminal on the circuit board. The trigger sub-circuit may further be coupled to the identity feature circuit of the battery by an identity authentication pin of the board-to-board connector of the battery.

If the trigger sub-circuit does not receive a control signal provided by the control signal terminal, the trigger sub-circuit may not output a verification signal. Therefore, the identity feature circuit of the battery also does not provide an identity signal.

When the trigger sub-circuit receives a control signal provided by the control signal terminal, the trigger sub-circuit may output a verification signal based on a power signal provided by the power signal terminal. Therefore, the identity feature circuit of the battery may provide, in response to the verification signal, an identity signal to the circuit board through the identity authentication pin of the board-to-board connector of the battery.

The detection sub-circuit may be coupled to the identity authentication pin of the board-to-board connector of the battery. The detection sub-circuit may obtain, at the identity authentication pin, the identity signal provided by the battery.

The detection sub-circuit may store a historical identity signal. The historical identity signal refers to an identity signal of a battery previously installed on the electronic device. It may be understood that, the historical identity signal is an identity signal of a battery previously obtained by the detection sub-circuit.

By comparing the identity signal with the historical identity signal, the detection sub-circuit may obtain a second detection result indicating that the identity signal is the same as or different from the historical identity signal. That the identity signal is the same as the historical identity signal may indicate that a battery reinstalled after the electronic device is disassembled is a battery previously used by the electronic device. That the identity signal is different from a historical identity signal may indicate that a battery reinstalled after the electronic device is disassembled is not a battery previously used by the electronic device.

The detection sub-circuit may be coupled to the processing chip, and provide, to the processing chip, a second detection result indicating that the identity signal is the same as or different from the historical identity signal. After receiving the second detection result, the processing chip determines that the battery reinstalled after the electronic device is disassembled is a battery used by the electronic device before the disassembly or a new battery.

In another possible implementation of the second aspect, the detection sub-circuit in the identity verification circuit is reused as the detection circuit.

When the state feature circuit and the identity feature circuit of the battery share the identity authentication pin of the board-to-board connector of the battery, the detection sub-circuit and the detection circuit are both coupled to the identity authentication pin on the board-to-board connector of the battery, to be coupled to the processing chip. Therefore, the detection sub-circuit in the identity verification circuit may be reused as a detection circuit.

For example, when the state feature circuit first outputs a feature signal and transfers the feature signal to the detection circuit of the circuit board through the identity authentication pin, the detection sub-circuit obtains the feature signal provided by the battery, obtains a first detection result indicating that the feature signal is a first feature signal or a second feature signal, and outputs the first detection result to the processing chip. Then, when the identity feature circuit outputs an identity signal and transfers the identity signal to the identity verification circuit of the circuit board through the identity authentication pin, the detection sub-circuit obtains the identity signal provided by the battery, obtains a second detection result indicating that the identity signal is the same as or different from a historical identity signal, and outputs the second detection result to the processing chip.

In another possible implementation of the second aspect, the trigger sub-circuit includes one transistor and one resistor. A control electrode of the transistor is coupled to the control signal terminal, a first electrode of the transistor is coupled to the power signal terminal, and a second electrode of the transistor is coupled to the battery. The resistor is connected in series between the first electrode of the transistor and the power signal terminal, or the resistor is connected in series between the second electrode of the transistor and the battery.

The trigger sub-circuit may include a sixth transistor and a seventh resistor.

A control electrode of the sixth transistor is coupled to the control signal terminal, a first electrode of the sixth transistor is coupled to the power signal terminal, and a second electrode of the sixth transistor may be coupled to the identity authentication pin on the board-to-board connector.

The seventh resistor may be connected in series between the second electrode of the sixth transistor and the identity authentication pin on the board-to-board connector. Alternatively, the seventh resistor may be connected in series between the first electrode of the sixth transistor and the power signal terminal.

When the control electrode of the sixth transistor does not receive a control signal provided by the control signal terminal, the first electrode of the sixth transistor is disconnected from the second electrode of the sixth transistor, so that the power signal terminal is isolated from the identity authentication pin on the board-to-board connector, and the sixth resistor of the identity feature circuit does not receive a verification signal.

When the control electrode of the sixth transistor receives a control signal provided by the control signal terminal, the first electrode of the sixth transistor is connected to the second electrode of the sixth transistor, so that the power signal terminal is connected to the identity authentication pin on the board-to-board connector, and a power signal provided by the power signal terminal is used as a verification signal.

When the sixth resistor of the identity feature circuit receives a verification signal, the sixth resistor and the seventh resistor are jointly connected in series between the power signal terminal and the negative electrode of the battery core. The detection sub-circuit may obtain a divided voltage, between the sixth resistor and the seventh resistor, of the voltage of the power signal provided by the power signal terminal as an identity signal.

According to a third aspect, this application provides an electronic device. The electronic device includes a battery, a circuit board, and a case. The battery may be the battery in any implementation of the foregoing first aspect. The circuit board may be the circuit board in any implementation of the foregoing second aspect. The battery and/or the circuit board are located inside the case.

Because the electronic device includes the battery in any implementation of the foregoing first aspect, the electronic device can have beneficial effects of the battery in any implementation of the foregoing first aspect. Similarly, because the electronic device includes the circuit board in any implementation of the foregoing second aspect, the electronic device can have beneficial effects of the circuit board in any implementation of the foregoing second aspect.

According to a fourth aspect, this application provides a battery charging method, applicable to the electronic device according to the third aspect. The battery charging method includes: The detection circuit obtains a state feature signal provided by the battery, and outputs a first detection result indicating that the state feature signal is a first state feature signal or a second state feature signal. The processing chip outputs a first charging policy when receiving the first detection result indicating that the state feature signal is the first state feature signal, or the processing chip outputs a second charging policy when receiving the first detection result indicating that the state feature signal is the second state feature signal. A charging voltage corresponding to the first charging policy is greater than a charging voltage corresponding to the second charging policy, and/or a charging current corresponding to the first charging policy is greater than a charging current corresponding to the second charging policy. When receiving the first charging policy, the charging circuit charges the battery based on the first charging policy. Alternatively, when receiving the second charging policy, the charging circuit charges the battery based on the second charging policy.

After obtaining the state feature signal provided by the state feature circuit, the detection circuit compares the voltage value of the state feature signal with a preset voltage threshold, to determine the state feature signal as a first state feature signal or a second state feature signal, thereby obtaining a first detection result.

The processing chip may obtain the first detection result provided by the detection circuit, to determine a new or old state of the battery based on the first detection result. The descriptions are provided above in detail, and details are not described herein again.

When determining that the battery is a new battery, the processing chip may consider that a quantity of charge-discharge cycles of the battery is 0, and then, matches the first charging policy corresponding to that the quantity of charge-discharge cycles is 0. When determining that the battery is an old battery, the processing chip may consider that a quantity of charge-discharge cycles of the battery is multiple, and then, matches the second charging policy corresponding to that the quantity of charge-discharge cycles is multiple.

When receiving the first charging policy provided by the processing chip, the charging circuit obtains a first charging voltage and a first charging current that conform to the first charging policy, and the charging circuit provides the first charging voltage and the first charging current to the battery, to charge the battery. When receiving the second charging policy provided by the processing chip, the charging circuit obtains a second charging voltage and a second charging current that conform to the second charging policy, and the charging circuit provides the second charging voltage and the second charging current to the battery, to charge the battery.

In this way, when a new battery is installed after the electronic device is disassembled, the electronic device can identify the new battery and charge the new battery by using the first charging policy, to improve a charging effect of the new battery and improve the charging experience of a user. When an old battery is installed after the electronic device is disassembled, the electronic device can identify the old battery and charge the old battery by using the second charging policy, so that charging safety of the old battery can be protected while prolonging the service life of the battery.

In another possible implementation of the fourth aspect, the electronic device includes a state switching signal terminal. The battery charging method further includes: The state switching signal terminal outputs a state switching signal after the detection circuit obtains a state feature signal provided by the battery, where the state feature circuit of the battery switches from a first state to a second state or remains in the second state.

The state switching signal in this specification refers to a signal that can enable the state feature circuit to switch from the first state to the second state. The state switching signal may depend on a specific reason (a change of a physical structure, a change of a chemical property, or a change due to another reason) for state switching of the state feature circuit. This is not limited in this embodiment of this application.

In this way, during power-on of the electronic device, the new battery uses the state switching signal terminal to output a state switching signal, which can switch the new battery to an old battery.

It should be noted that the processing chip of the circuit board determines the battery as a new battery or an old battery based on a first detection result obtained for a first time during the power-on of the electronic device, to further determine a charging policy for the battery. The charging policy for the battery is not changed because the new battery is switched to an old battery during the power-on of the electronic device.

In another possible implementation of the fourth aspect, the electronic device includes an identity verification circuit. After the detection circuit outputs the first detection result indicating that the state feature signal is the first state feature signal or the second state feature signal, the method further includes: The identity verification circuit outputs a verification signal to the battery. The identity verification circuit obtains an identity signal provided by the battery in response to the verification signal, and outputs a second detection result indicating that the identity signal is the same as or different from a historical identity signal. When the second detection result indicates that the identity signal is the same as the historical identity signal, that the processing chip outputs the second charging policy when receiving the first detection result indicating that the state feature signal is the second state feature signal includes: The processing chip outputs a second charging policy. The second charging policy matches a charging count corresponding to the historical identity signal.

When the identity verification circuit receives a control signal provided by the control signal terminal, the identity verification circuit may output a verification signal. The identity feature circuit of the battery may provide, in response to the verification signal, an identity signal to the circuit board. The identity verification circuit may obtain, at the identity authentication pin, the identity signal provided by the battery.

The identity verification circuit may store a historical identity signal. By comparing the identity signal with the historical identity signal, the identity verification circuit may obtain a second detection result indicating that the identity signal is the same as or different from the historical identity signal. That the identity signal is the same as the historical identity signal may indicate that a battery reinstalled after the electronic device is disassembled is a battery previously used by the electronic device. That the identity signal is different from a historical identity signal may indicate that a battery reinstalled after the electronic device is disassembled is not a battery previously used by the electronic device.

After receiving the second detection result, the processing chip determines that the battery reinstalled after the electronic device is disassembled is a battery used by the electronic device before the disassembly or a new battery.

When the first detection result received by the processing chip indicates that the battery is an old battery, the electronic device may identify, based on the received second detection result, whether the battery that is reinstalled after the electronic device is disassembled is a battery previously used by the electronic device. When the battery reinstalled after the electronic device is disassembled is not a battery previously used by the electronic device, the processing chip cannot accurately determine a charging count of the battery. In this case, the processing chip may match the second charging policy for the battery by using a preset charging count, and output the second charging policy to the charging circuit. When the battery reinstalled after the electronic device is disassembled is a battery previously used by the electronic device, a charging count of the battery previously used on the electronic device may be stored in the processing chip. The processing chip can accurately determine the charging count of the battery, to match the second charging policy for the battery more accurately, and output the second charging policy to the charging circuit.

In this way, when the electronic device has neither a motherboard nor a battery replaced, an appropriate second charging policy can be accurately matched for the battery, to further avoid a risk of damage during charging of an old battery while improving efficiency of charging the battery.

### BRIEF DESCRIPTION OF DRAWINGS

FIG. 1 is a schematic diagram of a structure of an electronic device after being disassembled according to some embodiments of this application;
FIG. 2 is a schematic diagram of a structure of a battery according to some embodiments of this application;
FIG. 3 is a schematic diagram of a connection between an electronic device and a charger according to some embodiments of this application;
FIG. 4 is a schematic diagram of a structure of a battery and a circuit board according to some embodiments of this application;
FIG. 5 is a schematic diagram of a signal trend of a battery charging method according to some embodiments of this application;
FIG. 6 is a schematic diagram of a structure of a battery and a circuit board according to some other embodiments of this application;
FIG. 7 is a schematic diagram of a signal trend of a battery charging method according to some other embodiments of this application;
FIG. 8 is a schematic diagram of another structure of the battery and the circuit board shown in FIG. 6;
FIG. 9 is a schematic diagram of a structure of a battery and a circuit board according to some other embodiments of this application;
FIG. 10 is a schematic diagram of another structure of the battery and the circuit board shown in FIG. 9;
FIG. 11 is a schematic diagram of a structure of a battery and a circuit board according to some other embodiments of this application;
FIG. 12 is a schematic diagram of another structure of the battery and the circuit board shown in FIG. 11;
FIG. 13 is a schematic diagram of a structure of a battery and a circuit board according to some other embodiments of this application;
FIG. 14 is a schematic diagram of a structure of a battery and a circuit board according to some other embodiments of this application;
FIG. 15 is a schematic diagram of a structure of a battery and a circuit board according to some other embodiments of this application;
FIG. 16 is a schematic diagram of a structure of a battery and a circuit board according to some other embodiments of this application;
FIG. 17 is a schematic diagram of a signal trend of a battery charging method according to some other embodiments of this application;
FIG. 18 is a schematic diagram of another structure of the battery and the circuit board shown in FIG. 15; and
FIG. 19 is a flowchart of a battery charging method implemented in the battery and the circuit board shown in FIG. 18.

### DESCRIPTION OF EMBODIMENTS

The following describes the technical solutions in embodiments of this application with reference to the accompanying drawings in embodiments of this application. It is clear that the described embodiments are merely some rather than all of embodiments of this application.

Terms such as "first" and "second" mentioned below are merely intended for a purpose of description, and shall not be understood as an indication or implication of relative importance or implicit indication of a quantity of indicated technical features. Therefore, a feature defined by "first" or "second" may explicitly or implicitly include one or more features. In the description of the present disclosure, unless otherwise stated, "multiple" means two or more than two.

In addition, in this application, directional terms such as "upper", "lower", "left", and "right" may include, but are not limited to, definitions relative to the schematic placement of components in the accompanying drawings. It should be understood that these directional terms may be relative concepts. They are used for relative descriptions and clarification, which may vary accordingly depending on the orientation in which the components are placed in the accompanying drawings.

In this application, unless otherwise specified and limited, the term "connection" should be understood in a broad sense. For example, the "connection" may be a fixed connection, a detachable connection, an integration, a direct connection, or an indirect connection through an intermediate medium. In addition, the term "coupling" may be a manner of implementing electrical connection of signal transmission.

In this application, a control electrode of each used transistor is a gate of the transistor, a first electrode thereof is one of a source and a drain of the transistor, and a second electrode thereof is the other of the source and the drain of the transistor. Because the source and the drain of the transistor may be structurally symmetrical, the source and the drain of the transistor may be structurally indistinguishable. That is, the first electrode and the second electrode of the transistor in this embodiment of the present disclosure may be structurally indistinguishable. For example, when the transistor is a P-type transistor, a first electrode of the transistor is a source, and a second electrode thereof is a drain. For example, when the transistor is an N-type transistor, a first electrode of the transistor is a drain, and a second electrode thereof is a source.

As used in this specification, the term "about", "substantially", or "approximately" includes a stated value and an average value within an acceptable range of deviation of a particular value, and the acceptable range of deviation is determined by a person of ordinary skill in the art while considering measurement in question and errors associated with measurement of a particular quantity (that is, limitations of a measurement system).

During repairing of an electronic device due to a failure of a component, a case needs to be opened first to disassemble a battery from the electronic device, the component that fails is replaced with a new component, and then, a battery is reinstalled to the electronic device. During disassembly and reinstallation, a battery may be replaced, or a circuit board may be replaced.

When neither the battery nor the circuit board is replaced, and when the battery is not replaced, and the circuit board is replaced with a new circuit board, because the circuit board cannot identify that the battery is the previously used old battery, charging the old battery by using a charging policy for a new battery may lead to a risk of damaging the old battery.

When the battery is replaced with a new battery, and the circuit board is not replaced, and when the battery is replaced with a new battery, and the circuit board is replaced with a new circuit board, because the circuit board cannot identify that the battery is a new battery, charging the old battery by using a charging policy for an old battery may degrade an effect of charging the new battery.

It should be noted that in this specification, the battery is a new battery, which is a brand new battery that has never supplied power to an electronic device after delivery from the factory. Correspondingly, in this specification, the battery is an old battery, which is a battery that has supplied power to an electronic device at least once. It may be understood that after a new battery is installed into an electronic device, the new battery becomes an old battery after the electronic device is powered on.

Based on this, embodiments of this application provide a battery, a circuit board, an electronic device, and a battery charging method, to overcome the foregoing technical problems that an old battery may be damaged and a charging effect of the new battery may be reduced because an old state of the battery cannot be recognized.

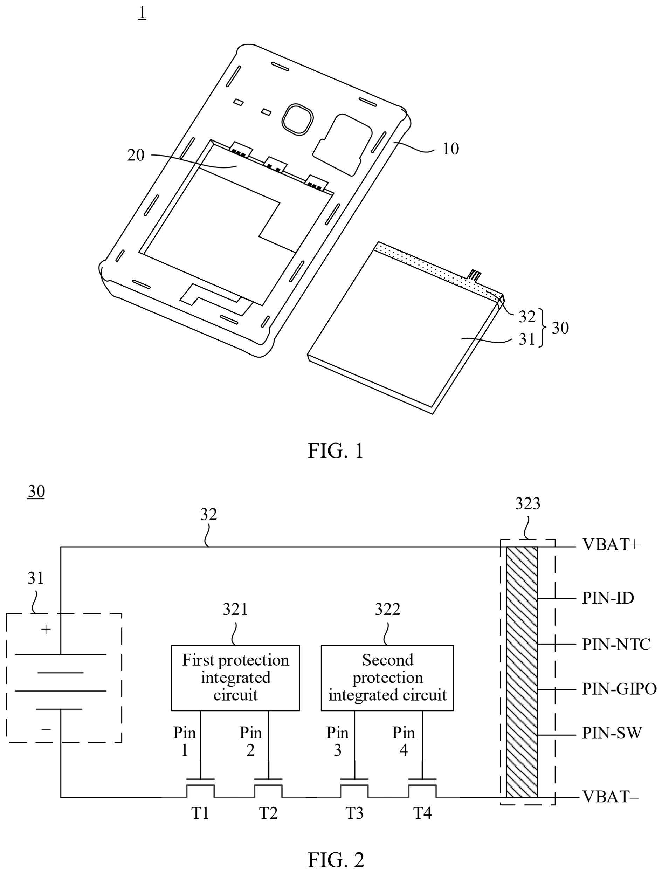

FIG. 1 is a schematic diagram of a structure of an electronic device after being disassembled according to some embodiments of this application.

As shown in FIG. 1, an embodiment of this application provides an electronic device 1. For example, the electronic device 1 includes, but is not limited to, a portable electronic device with a rechargeable battery, for example, a laptop computer, a mobile phone, a smartphone, a tablet computer, an intelligent in-vehicle device, a navigator, a sports camera, a smart appliance, an artificial intelligence device, a wearable device, or a virtual reality/augmented reality/mixed reality device. In another example, the electronic device 1 includes, but is not limited to, a vehicle with a rechargeable battery, for example, an electric car, an electric bicycle, a power-assisted bicycle, or an electric wheel chair. For ease of understanding, a scenario in which the electronic device 1 includes a mobile phone is always used as an example below for description.

The electronic device 1 includes a case 10, a circuit board 20, and a battery 30. The case 10 has an accommodating space therein, and the circuit board 20 and the battery 30 may be accommodated in the accommodating space. The battery 30 may be coupled to the circuit board 20, to provide electric energy for the circuit board 20, so that the circuit board 20 supports operation of the electronic device 1. For example, the circuit board 20 may be a motherboard of the electronic device 1.

In some implementations, the case 10 may include plastic. Plastic has good ductility. A case made of a plastic material is conducive to shaping and manufacturing of the case 10, further is conducive to mass production of the case 10, and therefore, is conducive to mass production of the electronic device 1. It should be noted that the case 10 is not limited to including plastic, and a material included in the case 10 may be selected based on an actual situation. For example, in some other implementations, the case 10 may include a metal material such as aluminum or iron. The foregoing merely describes an example of the material of the case 10, and should not be construed as a limitation to a specific material of the case 10.

The battery 30 may be a rechargeable battery. The rechargeable battery includes a lithium-ion battery, a lead-acid battery, a nickel-cadmium battery, a nickel-iron battery, or a nickel-metal hydride battery, and may also include another appropriate battery, which is not limited herein. A specific type of the battery 30 may depend on a specific scenario of the electronic device 1, which is not limited herein.

As shown in FIG. 1, the battery 30 may include a battery core 31 and a protection board 32. The battery core 31 includes a positive electrode and a negative electrode. The protection board 32 may be separately coupled to the positive electrode and the negative electrode of the battery core 31.

The battery core 31 may be an aluminum-case battery core, a pouch battery core (also referred to as a polymer battery core), or a cylindrical battery core. The battery core 31 is an electricity storage part of the battery 30, and is configured to: after storing electric energy through charging, release the electric energy to provide the electronic device 1 with electric energy required for operation. For example, the positive electrode of the battery core 31 outputs a +5 V voltage signal, and a negative electrode of the battery core 31 outputs a 0 V voltage signal. Certainly, in some other examples, a voltage value of a voltage signal output by the positive electrode of the battery core 31 may alternatively be greater than or less than 5 V, which is not limited herein.

The protection board 32 may be an integrated circuit board configured to protect the battery core 31. By being separately coupled to the positive electrode and the negative electrode of the battery core 31, the protection board 32 can prevent problems, such as over-charging, over-discharging, an excessive transmission current, an excessive transmission voltage, a short circuit, and an excessively high battery temperature, of the battery core 31, thereby preventing the battery core 31 from burning and causing an accident.

FIG. 2 is a schematic diagram of a structure of a battery according to some embodiments of this application.

As shown in FIG. 2, the protection board 32 may include a first protection integrated circuit (integrated circuit, IC) 321 and a second protection integrated circuit 322. The protection board 32 may further include a first transistor T1, a second transistor T2, a third transistor T3, and a fourth transistor T4.

The first protection integrated circuit 321 may include a pin 1 and a pin 2. The pin 1 is coupled to a control electrode of the first transistor T1, and the pin 2 is coupled to a control electrode of the second transistor T2. A first electrode of the first transistor T1 may be coupled to a negative electrode VBAT- of the battery core 31, and a second electrode of the first transistor T1 may be coupled to a first electrode of the second transistor T2.

The second protection integrated circuit 322 may include a pin 3 and a pin 4. The pin 3 is coupled to a control electrode of the third transistor T3, and the pin 4 is coupled to a control electrode of the fourth transistor T4. A first electrode of the third transistor T3 is coupled to a second electrode of the second transistor T2, a second electrode of the third transistor T3 is coupled to a first electrode of the fourth transistor T4, and a second electrode of the fourth transistor T4 may be coupled to a negative electrode pin of the protection board 32.

It may be understood that, a total of four transistors, that is, the first transistor T1 to the fourth transistor T4, in FIG. 2 are sequentially connected in series between the negative electrode VBAT- of the battery core 31 and a negative electrode pin of the protection board 32. When all the four transistor are in an on state, the negative electrode VBAT- of the battery core 31 is connected to the negative electrode pin of the protection board 32, to form a circuit for charging or discharging the battery core 31. When any one of the four transistors is in an off state, the negative electrode VBAT-of the battery core 31 is disconnected from the negative electrode pin of the protection board 32, so that a circuit for charging or discharging the battery core 31 can be cut off.

In some implementations, descriptions are provided by using an example in which the protection board 32 prevents the battery core 31 from over-discharging. When the battery core 31 discharges an external load through a discharging circuit, a voltage of the battery core 31 gradually decreases. The first protection integrated circuit 321 monitors a voltage of the battery core 31 in real time. When the first protection integrated circuit 321 detects that the voltage of the battery core 31 decreases to a discharging voltage threshold, it is considered that the battery core 31 is in an over-discharged state. In this case, the first protection integrated circuit 321 switches the first transistor T1 from an on state to an off state through the pin 1, and cuts off the discharging circuit of the battery core 31, so that the battery core 31 stops discharging.

Further, when the battery core 31 is in an over-discharged state, the first protection integrated circuit 321 always controls the first transistor T1 to be in an off state, to keep the discharging circuit of the battery core 31 disconnected. After the protection board 32 detects a charging voltage, the first protection integrated circuit 321 switches the first transistor T1 from an off state to an on state through the pin 1. In this case, a charging circuit of the battery core 31 is formed, and the battery core 31 receives charging and stores electrical energy piezoelectrically.

Description is made above only by using an example in which the battery core 31 is prevented from being over-discharged. For reasons such as over-charging, an excessive transmission current, an excessive transmission voltage, a short circuit, and an excessively high battery temperature, implementation may be made by referring to the foregoing manner or using another appropriate manner. This is not limited in this embodiment of this application.

As shown in FIG. 2, the protection board 32 may further include a board-to-board (board to board, BTB) connector 323. The battery core 31 may be coupled to a circuit board 20 by the board-to-board connector 323, to implement signal transmission between the battery 30 and the circuit board 20.

The board-to-board connector 323 may include a plurality of communication pins. The battery 30 may communicate with the circuit board 20 by using some or all of the communication pins.

For example, the plurality of communication pins may include an identity authentication pin PIN-ID, and the circuit board 20 may obtain an identity signal of the battery 30 by using the identity authentication pin PIN-ID, to identify an identity of the battery 30.

In another example, the plurality of communication pins may include a temperature detection pin PIN-NTC, and the circuit board 20 may obtain a temperature signal of the battery 30 by using the temperature detection pin PIN-NTC, to monitor a temperature of the battery 30.

In another example, the plurality of communication pins may further include an input/output pin PIN-GIPO. The circuit board 20 may obtain some other signals of the battery 30 or provide some signals to the battery 30 by using the input/output pin PIN-GIPO. For example, the circuit board 20 may provide a signal to the battery 30 by using the input/output pin PIN-GIPO, to control on/off of an internal transistor of the battery 30, thereby implementing a corresponding function, which is not limited herein.

In addition, in another example, the plurality of communication pins may further include a test pin PIN-SW, and the test pin PIN-SW is a communication pin configured to detect whether various functions (for example, a function of preventing over-charging and a function of preventing over-discharging) of the battery 30 are normal when the battery 30 is delivered from the factory. The test pin PIN-SW usually does not play a role in communication between the protection board 32 and the circuit board 20.

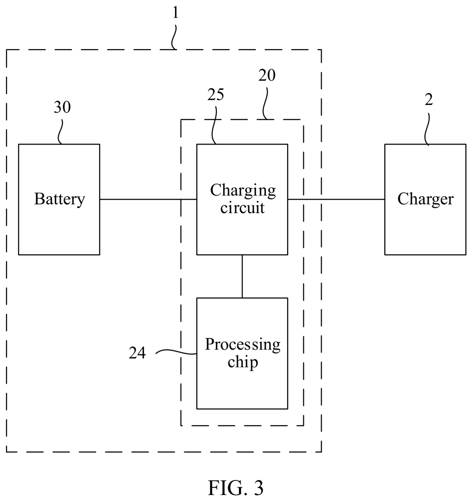

FIG. 3 is a schematic diagram of a connection between an electronic device and a charger according to some embodiments of this application.

When the battery 30 in the electronic device 1 has a low power quantity, a charger 2 needs to be inserted into the electronic device 1 to charge the battery 30. As shown in FIG. 3, the charger 2 is coupled to the circuit board 20 after being inserted into the electronic device 1, and the circuit board 20 transmits electric energy to the battery 30 to charge the battery 30.

The circuit board 20 may include a charging circuit (charger) 25, and the charging circuit 25 is coupled to the battery 30. When the charger 2 is inserted into the electronic device 1, the charging circuit 25 is further coupled to the charger 2. The charger 2 can convert mains electricity into an initial charging voltage and an initial charging current, and provide the initial charging voltage and the initial charging current to the charging circuit 25. After processing the initial charging voltage and the initial charging current, the charging circuit 25 may provide a charging voltage and a charging current to the battery 30, to charge the battery 30.

The circuit board 20 may include a processing chip 24. The processing chip 24 may be a system on chip (system on chip, SOC) on a motherboard of the electronic device 1. It may be understood that, the circuit board 20 may be the motherboard of the electronic device 1.

The processing chip 24 may be coupled to the charging circuit 25. The processing chip 24 may output different charging policies to the charging circuit 25, to control the charging circuit 25 to adjust, based on the different charging policies, a charging voltage and a charging current provided to the battery 30.

For example, when receiving the first charging policy provided by the processing chip 24, the charging circuit 25 may process the initial charging voltage to obtain a first charging voltage conforming to the first charging policy. Meanwhile, the charging circuit may further process the initial charging current to obtain a first charging current conforming to the first charging policy. The charging circuit 25 provides the first charging voltage and the first charging current to the battery 30, to charge the battery 30.

When receiving the second charging policy provided by the processing chip 24, the charging circuit 25 may process the initial charging voltage to obtain a second charging voltage conforming to the second charging policy. Meanwhile, the charging circuit may further process the initial charging current to obtain a second charging current conforming to the second charging policy. The charging circuit 25 provides the second charging voltage and the second charging current to the battery 30, to charge the battery 30.

In addition, the charging circuit 25 and the charger 2 can also communicate with each other. The charging circuit 25 may control a magnitude of the initial charging voltage and a magnitude of the initial charging current that are output by the charger 2.

Some specific product scenarios are provided below to describe specific structures of the battery 30 and the circuit board 20, and how the electronic device 1 identifies, during power-on, a new or old state of the battery 30 and charges the battery 30.

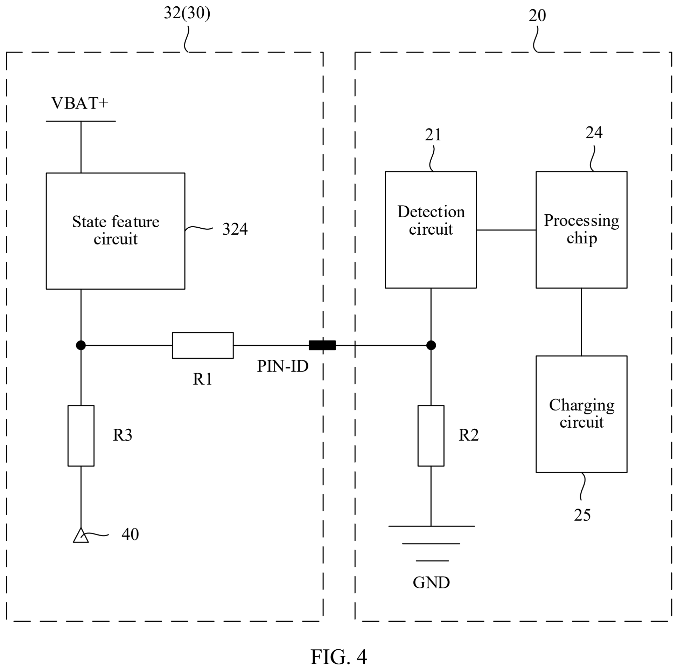

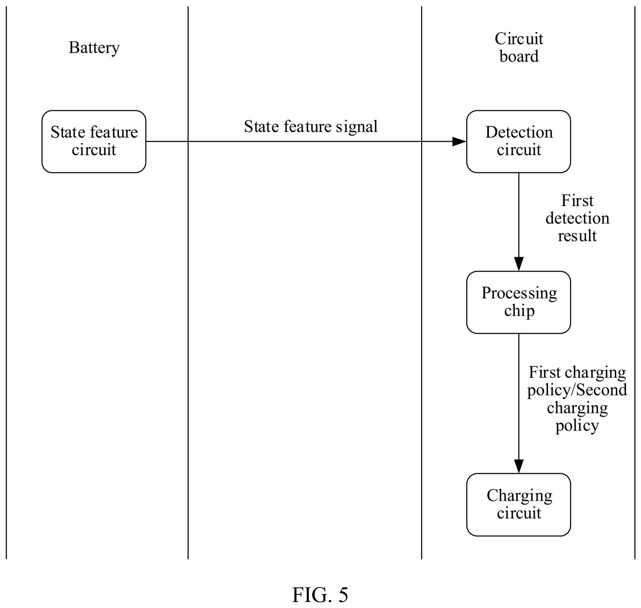

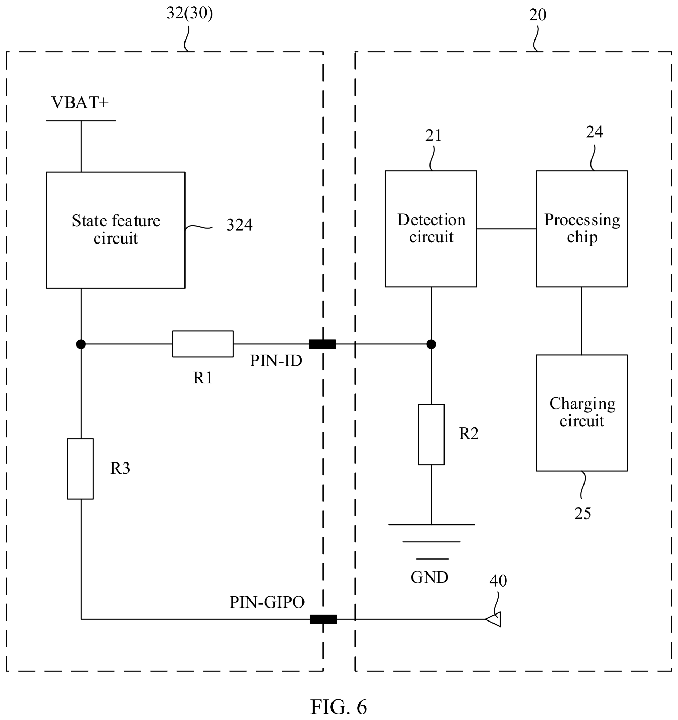

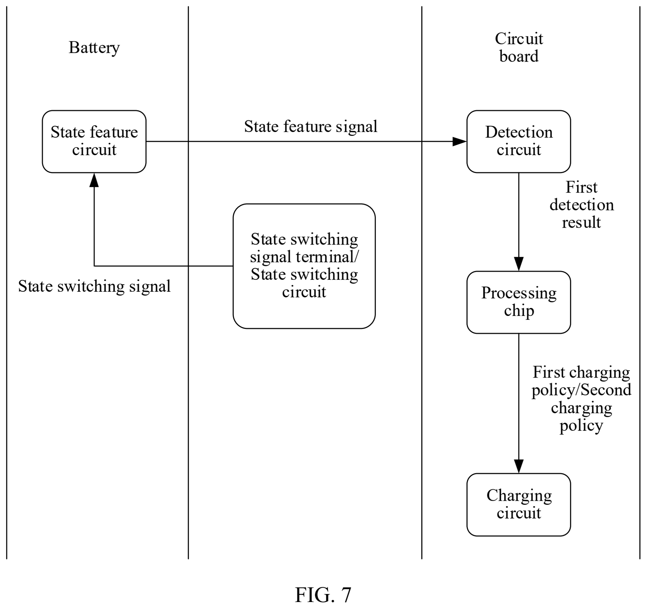

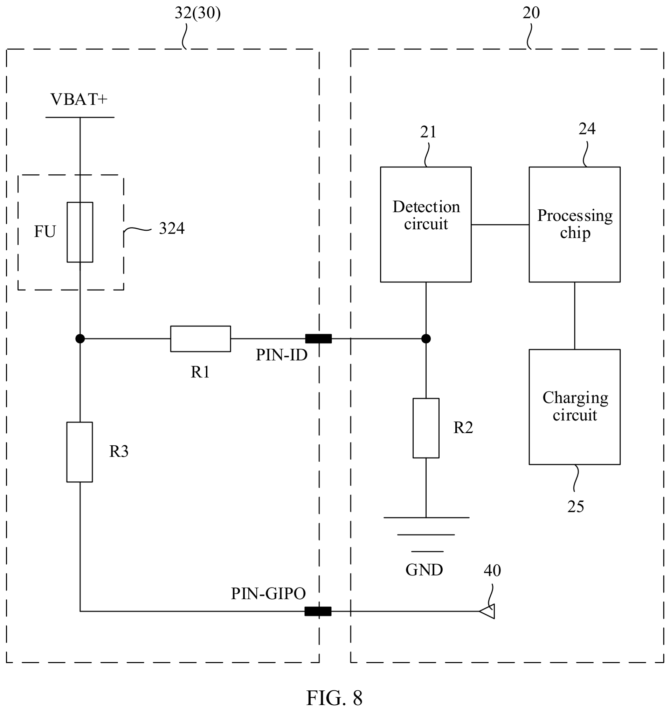

FIG. 4 is a schematic diagram of a structure of a battery and a circuit board according to some embodiments of this application. FIG. 5 is a schematic diagram of a signal trend of a battery charging method according to some embodiments of this application. FIG. 6 is a schematic diagram of a structure of a battery and a circuit board according to some other embodiments of this application. FIG. 7 is a schematic diagram of a signal trend of a battery charging method according to some other embodiments of this application. FIG. 8 is a schematic diagram of another structure of the battery and the circuit board shown in FIG. 6.

As shown in FIG. 4, the protection board 32 may further include a state feature circuit 324. The state feature circuit 324 is configured to indicate a new or old state of the battery 30. For example, that the state feature circuit 324 is in a first state indicates that the battery 30 is currently a new battery, and that the state feature circuit 324 is in a second state indicates that the battery 30 is currently an old battery.

The state feature circuit 324 may be coupled to a positive electrode VBAT+ of the battery core 31. During power-on of the electronic device 1, after receiving a positive electrode signal (for example, a +5 V voltage signal) provided by a positive electrode VBAT+ of the battery core 31, the state feature circuit 324 correspondingly outputs a state feature signal based on a state of the state feature circuit 324.

For example, when the state feature circuit 324 is in the first state, the state feature circuit 324 outputs the first state feature signal based on the positive electrode signal provided by the positive electrode VBAT+ of the battery core 31. When the state feature circuit 324 is in the second state, the state feature circuit 324 outputs the second state feature signal based on the positive electrode signal provided by the positive electrode VBAT+ of the battery core 31.

As shown in FIG. 4, the state feature signal output by the state feature circuit 324 may be transmitted to the circuit board 20 through the identity authentication pin PIN-ID on the BTB connector 323 in the protection board 32. Based on this, the circuit board 20 can obtain, through the identity authentication pin PIN-ID, the state feature signal output by the state feature circuit 324.

Certainly, the state feature signal output by the state feature circuit 324 may also be received by an other communication pin through the BTB connector 323 and transmitted to the circuit board 20. Correspondingly, the circuit board 20 can obtain, through the other communication pin, the state feature signal output by the state feature circuit 324. In this embodiment of this application, which communication pin on the BTB connector 323 transmits the state feature signal output by the state feature circuit 324 is not specifically limited. For ease of understanding, in FIG. 4, description is made by using an example in which the state feature signal output by the state feature circuit 324 is transmitted to the circuit board 20 through the identity authentication pin PIN-ID on the BTB connector 323 in the protection board 32.

As shown in FIG. 4, in addition to the processing chip 24 and the charging circuit 25, the circuit board 20 may further include a detection circuit 21. The detection circuit 21 may be coupled to the foregoing processing chip 24.

The detection circuit 21 may be coupled to a communication pin that is on a BTB connector 323 and that transmits the state feature signal. For example, the detection circuit 21 is coupled to the identity authentication pin PIN-ID on the BTB connector 323. The detection circuit 21 may detect, in a manner of converting an analog signal into a digital signal (analog-to-digital converter, ADC) for detection, the state feature signal provided by the state feature circuit 324 of the battery 30.

For example, after obtaining the state feature signal provided by the state feature circuit 324, the detection circuit 21 performs ADC conversion on the state feature signal, to obtain a voltage value (a digital signal) of the state feature signal. In addition, the voltage value of the state feature signal is compared with a preset voltage threshold, to determine the state feature signal as a first state feature signal or a second state feature signal, thereby obtaining a first detection result.

For example, when the voltage value of the state feature signal is greater than or equal to the preset voltage threshold, it indicates that the state feature signal output by the battery 30 is the first state feature signal output by the state feature circuit 324 when the state feature circuit 324 is in the first state. Therefore, the detection circuit 21 outputs the first detection result indicating that the state feature signal is the first state feature signal.

In another example, when the voltage value of the state feature signal is less than the preset voltage threshold, it indicates that the state feature signal output by the battery 30 is the second state feature signal output by the state feature circuit 324 when the state feature circuit 324 is in the second state. Therefore, the detection circuit 21 outputs a first detection result indicating that the state feature signal is a first state feature signal or a second state feature signal.

The processing chip 24 may obtain the first detection result provided by the detection circuit 21, to determine a new or old state of the battery 30 based on the first detection result. For example, when the processing chip 24 obtains the first detection result indicating that the state feature signal is the first state feature signal, the processing chip 24 determines that the battery 30 is a new battery. When the processing chip 24 obtains the first detection result indicating that the state feature signal is the second state feature signal, the processing chip 24 determines that the battery 30 is an old battery.

When determining that the battery 30 is a new battery, the processing chip 24 may consider that a quantity of charge-discharge cycles of the battery 30 is 0, and then, matches the first charging policy corresponding to that the quantity of charge-discharge cycles is 0. When determining that the battery 30 is an old battery, the processing chip 24 may consider that a quantity of charge-discharge cycles of the battery 30 is N (N>1 and is an integer), and then, matches the second charging policy corresponding to that the quantity of charge-discharge cycles is N.

Each charging policy includes at least a charging voltage and a charging current. Based on this, the charging policy may further include other appropriate data, which is not limited herein.

Due to a smaller charging count of a new battery, the new battery has smaller internal resistance, a larger capacity, and a stronger charging tolerance, the charging voltage and the charging current in the first charging policy may be larger. The first charging policy can improve charging efficiency of a new battery and shorten a charging time. If the first charging policy is applied to an old battery, it is prone to battery bulging and further battery damage.

Due to a larger charging count of an old battery, the old battery has larger internal resistance, a smaller capacity, and a weaker charging tolerance, for charging safety, the charging voltage and the charging current in the second charging policy need to be smaller. The second charging policy can improve charging safety of an old battery. If the second charging policy is applied to a new battery, problems, such as a low charging speed and incomplete charging, of the battery may be caused.

It may be understood that a charging voltage in the first charging policy may be greater than a charging voltage in the second charging policy. A charging current in the first charging policy may also be greater than a charging voltage in the second charging policy.

It should be noted that in a charging policy, a charging voltage and a charging current may change with time. Based on this, that a charging voltage in the first charging policy is greater than a charging voltage in the second charging policy may mean that an average charging voltage value of the first charging policy is greater than an average charging voltage value of the second charging policy. Alternatively, it may mean that at a same power quantity of the battery 30, a charging voltage value corresponding to the first charging policy is greater than a charging voltage value corresponding to the second charging policy. Similarly, that a charging current in the first charging policy is greater than a charging current in the second charging policy may mean that an average charging current value of the first charging policy is greater than an average charging current value of the second charging policy. Alternatively, it may mean that at a same power quantity of the battery 30, a charging current value corresponding to the first charging policy is greater than a charging current value corresponding to the second charging policy.

As shown in FIG. 5, the state feature circuit 324 of the battery 30 provides a state feature signal to the circuit board 20. The detection circuit 21 of the circuit board 20 obtains the state feature signal provided by the battery 30, and outputs a first detection result indicating that the feature signal is a first state feature signal or a second state feature signal. The processing chip 24 can determine a new or old state of the battery 30 based on the first detection result, output the first charging policy to the charging circuit 25 when determining that the battery 30 is a new battery, and output the second charging policy to the charging circuit 25 when determining that the battery 30 is an old battery. When receiving the first charging policy, the charging circuit 25 provides a charging voltage and a charging current that conform to the first charging policy, for charging the battery 30, and when receiving the second charging policy, the charging circuit 25 provides a charging voltage and a charging current that conform with the second charging policy, for charging the battery 30.

In this way, when a new battery is installed after the electronic device 1 is disassembled, the electronic device 1 can identify the new battery and charge the new battery by using the first charging policy, to improve a charging effect of the new battery and improve the charging experience of a user. When an old battery is installed after the electronic device 1 is disassembled, the electronic device 1 can identify the old battery and charge the old battery by using the second charging policy, so that charging safety of the old battery can be protected while prolonging the service life of the battery 30.

In some embodiments, as shown in FIG. 4, the protection board 32 may further include a state switching signal terminal 40.

During power-on of the electronic device 1, the state switching signal terminal 40 may output the state switching signal after the state feature circuit 324 outputs the state feature signal. For example, the state switching signal terminal 40 may be set with delayed triggering after the electronic device 1 is powered on, and automatically output a state switching signal after reaching a delay time. Delay duration may be greater than duration required by the battery 30 to provide a state feature signal to the detection circuit 21 on the circuit board 20 after the electronic device 1 is powered on, to ensure that the detection circuit 21 can obtain, before the state switching signal terminal 40 outputs a state switching signal, a feature signal provided by the battery 30.

The state feature circuit 324 may be directly coupled to the state switching signal terminal 40 on the protection board 32. In this way, the state feature circuit 324 can obtain the state switching signal provided by the state switching signal terminal 40.

In some other embodiments, as shown in FIG. 6, FIG. 6 differs from FIG. 4 in that: The battery 30 may not include the state switching signal terminal 40, and instead, the circuit board 20 includes the state switching signal terminal 40. It may be understood that, the state switching signal terminal 40 of the circuit board 20 outputs the state switching signal to control the state feature circuit 324 of the battery 30 to perform state switching.

The state feature circuit 324 of the battery 30 may be coupled to the state switching signal terminal 40 by a communication pin on the BTB connector 323. A communication pin on the BTB connector 323 connected to the state switching signal terminal 40 may be different from a communication pin on the TB connector 323 of the detection circuit 21. For example, a communication pin on the BTB connector 323 connected to the state switching signal terminal 40 is an input/output pin PIN-GIPO, and a communication pin on the TB connector 323 of the detection circuit 21 is an identity authentication pin PIN-ID.

In some implementations, the state switching signal terminal 40 may be coupled to the detection circuit 21. In this way, the state switching signal terminal 40 can learn whether the detection circuit 21 obtains the feature signal provided by the battery 30.

When the state switching signal terminal 40 determines that the detection circuit 21 obtains the state feature signal provided by the battery 30, regardless of whether the state feature signal is a first state feature signal or a second state feature signal, the state switching signal terminal 40 outputs the state switching signal.

In some other examples, the state switching signal terminal 40 may not be coupled to the detection circuit 21. The state switching signal terminal 40 may be set with delayed triggering after the electronic device 1 is powered on, and automatically output a state switching signal after reaching a delay time. Delay duration may be greater than duration required by the battery 30 to provide a state feature signal to the detection circuit 21 on the circuit board 20 after the electronic device 1 is powered on, to ensure that the detection circuit 21 can obtain, before the state switching signal terminal 40 outputs a state switching signal, a feature signal provided by the battery 30.

As shown in FIG. 7, FIG. 7 differs from FIG. 5 in that: Regardless of whether the state switching signal terminal 40 belongs to the circuit board 20 or belongs to the protection board 32 of the battery 30, the state switching signal terminal 40 outputs a state switching signal to the state feature circuit 324 of the battery 30 after the state feature circuit 324 of the battery 30 outputs a state feature signal to the detection circuit 21 of the circuit board 20.

When the state feature circuit 324 obtains, in the first state, the state switching signal provided by the state switching signal terminal 40, a state of the state feature circuit 324 can be switched once. When the state feature circuit 324 obtains, in the second state, the state switching signal provided by the state switching signal terminal 40, a state of the state feature circuit 324 is maintained in the second state.

It should be noted that state switching of the state feature circuit 324 always means that the state feature circuit 324 switches from the first state to the second state. In addition, the state feature circuit 324 cannot switch from the second state to the first state. It may be understood that an action of state switching of the state feature circuit 324 is irreversible.

For example, state switching of the state feature circuit 324 may be state switching caused by an irreversible change of a physical structure of an electronic component in the state feature circuit 324, state switching caused by an irreversible change of a chemical property of an electronic component in the state feature circuit 324, or state switching caused by another irreversible reason. This is not limited in embodiments of this application.

The state switching signal in this specification refers to a signal that can enable the state feature circuit 324 to switch from the first state to the second state. The state switching signal may depend on a specific reason (a change of a physical structure, a change of a chemical property, or a change due to another reason) for state switching of the state feature circuit 324. This is not limited in this embodiment of this application.

For example, before the state feature circuit 324 obtains the state switching signal provided by the state switching signal terminal 40, the state feature circuit 324 is in the first state, and the state feature circuit 324 outputs a first state feature signal based on the positive electrode signal provided by the positive electrode VBAT+ of the battery core 31. After the state feature circuit 324 obtains the state switching signal provided by the state switching signal terminal 40, the state feature circuit 324 is in the second state, and the state feature circuit 324 outputs a second state feature signal based on the positive electrode signal provided by the positive electrode VBAT+ of the battery core 31.

In this way, during power-on of the electronic device 1, the new battery uses the state switching signal terminal 40 to output a state switching signal, which can switch the new battery to an old battery.

It should be noted that the processing chip 24 of the circuit board 20 determines the battery 30 as a new battery or an old battery based on a first detection result obtained for a first time during the power-on of the electronic device 1, to further determine a charging policy for the battery 30. The charging policy for the battery 30 is not changed because the new battery is switched to an old battery during the power-on of the electronic device 1.

As shown in FIG. 8, the state feature circuit 324 may include a fuse FU. A first state of the fuse FU is a circuit-on state before the fuse FU is blown, and a second state of the fuse FU is a circuit-off state after the fuse FU is blown. In some other implementations, the state feature circuit 324 may further include a metal wire having a function the same as that of the fuse. The metal wire is blown when a current is large, resulting from a function the same as that of blowing the fuse.

Based on that the state feature circuit 324 may include the fuse FU, the fuse outputs, the fuse in the first state outputs a first state feature signal whose voltage is approximately equal to that of the positive electrode signal provided by the positive electrode VBAT+ of the battery core 31. The fuse in the second state outputs a second state feature signal of a zero voltage. In this way, the circuit board 20 may determine, based on whether a voltage of the obtained state feature signal is greater than a preset voltage threshold, whether a feature signal provided by the state feature circuit 324 is a first feature signal or a second feature signal. For example, the preset voltage threshold may range from 1 V to 1.5 V.

For ease of understanding, description is made subsequently by using an example in which the state feature circuit 324 includes the fuse FU.

In some implementations, as shown in FIG. 4, FIG. 6, and FIG. 8, the protection board 32 of the battery 30 may further include a third resistor R3. The third resistor R3 may be connected in series between the fuse FU and the state switching signal terminal 40.

The third resistor R3 is configured to: when the fuse receives a state switching signal, provide a voltage exceeding a tolerance of the fuse to the fuse, to blow the fuse.

For example, a resistance value RFU of the fuse may approximately satisfy 200 mΩ≤RFU≤700 mΩ, and a resistance value R3' of the third resistor R3 may approximately satisfy 1 Ω≤R3'≤2 Ω.

In some implementations, as shown in FIG. 4, FIG. 6, and FIG. 8, the protection board 32 may include a first resistor R1, and the circuit board 20 may include a second resistor R2. One terminal of the first resistor R1 may be coupled to the state feature circuit 324, and an other terminal of the first resistor R1 may be coupled to the identity authentication pin PIN-ID. One terminal of the second resistor R2 is coupled to the identity authentication pin PIN-ID, and an other end of the second resistor R2 is coupled to a ground terminal GND on the circuit board 20. It may be understood that, the first resistor R1 and the second resistor R2 are coupled to each other and are connected in series between the state feature circuit 324 and the ground terminal GND on the circuit board 20.

The first resistor R1 and the second resistor R2 jointly form a voltage divider circuit, configured to perform voltage division on a signal output by the state feature circuit 324. As shown in FIG. 6, a detection circuit 21 may be coupled to one terminal of the second resistor R2, to obtain a state feature signal obtained after the voltage division of the signal output by the state feature circuit 324. A voltage value V1' of a state feature signal obtained after voltage division=a signal V1 output by the state feature circuit 324×R2/(R1+R2).

In this way, when a voltage detection range of the detection circuit 21 is smaller than a voltage value of the signal output by the state feature circuit 324, the detection circuit 21 that originally cannot obtain a state feature signal can obtain a state feature signal with a smaller voltage value after voltage division, and the detection circuit 21 of the circuit board 20 can also determine a new or old state of a battery 30 based on the feature signal obtained after voltage division.

In some examples, a maximum detection voltage of the detection circuit 21 is +1.8 V, and a voltage of a signal output by the state feature circuit 324 is +5 V. Therefore, when R1=50 KΩ, R2≤28 KΩ. Certainly, the maximum detection voltage of the detection circuit 21 may also be another voltage value. This example is merely for illustration, and should not be considered as a limitation to a magnitude relationship between a resistance value of the first resistor R1 and a resistance value of the second resistor R2. In some other examples, the resistance value of the first resistor R1 may be equal to the resistance value of the second resistor R2, or the resistance value of the first resistor R1 may be greater than the resistance value of the second resistor R2.

This implementation is described by using an example in which the first resistor R1 is located on the protection board 32 and the second resistor R2 is located on the circuit board 20. In some other implementations, the first resistor R1 and the second resistor R2 may be both located on the protection board 32, and an other terminal of the second resistor R2 may be coupled to a negative electrode VBAT- of the battery core 31. Alternatively, both the first resistor R1 and the second resistor R2 may be located on the circuit board 20, and one terminal of the first resistor R1 may be coupled to the identity authentication pin PIN-ID. This is not limited in this embodiment of this application.

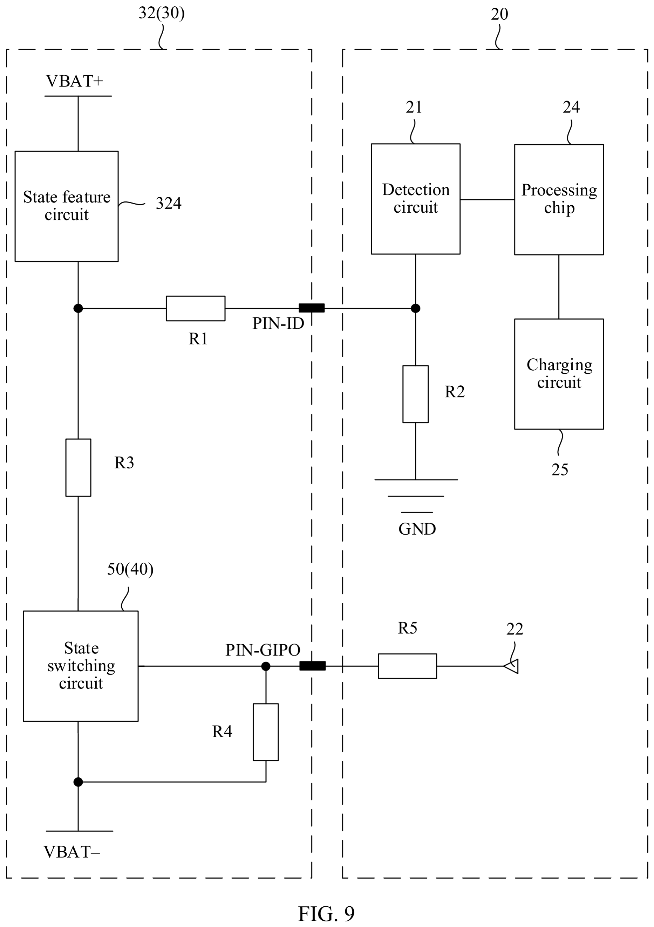

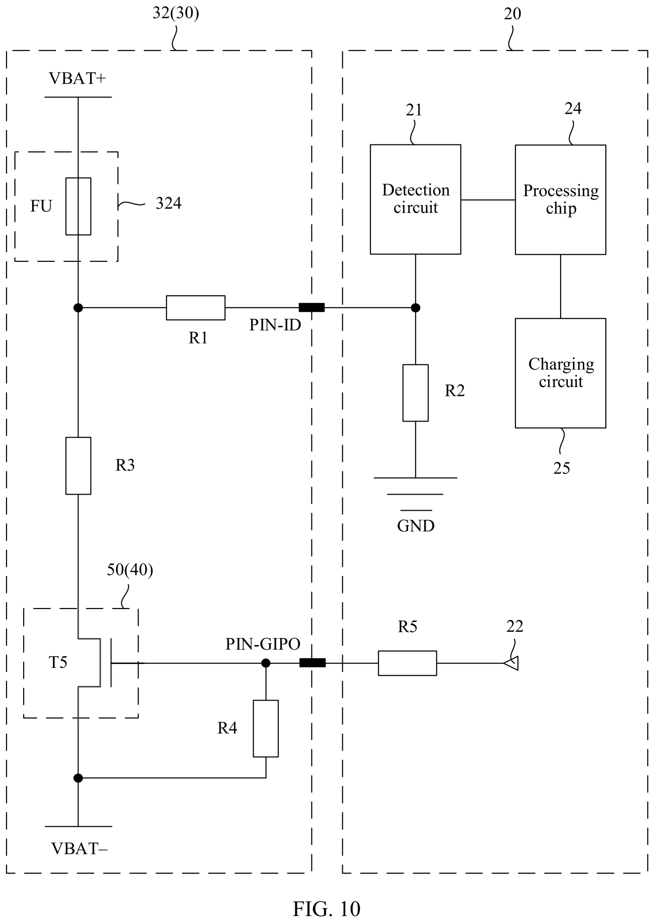

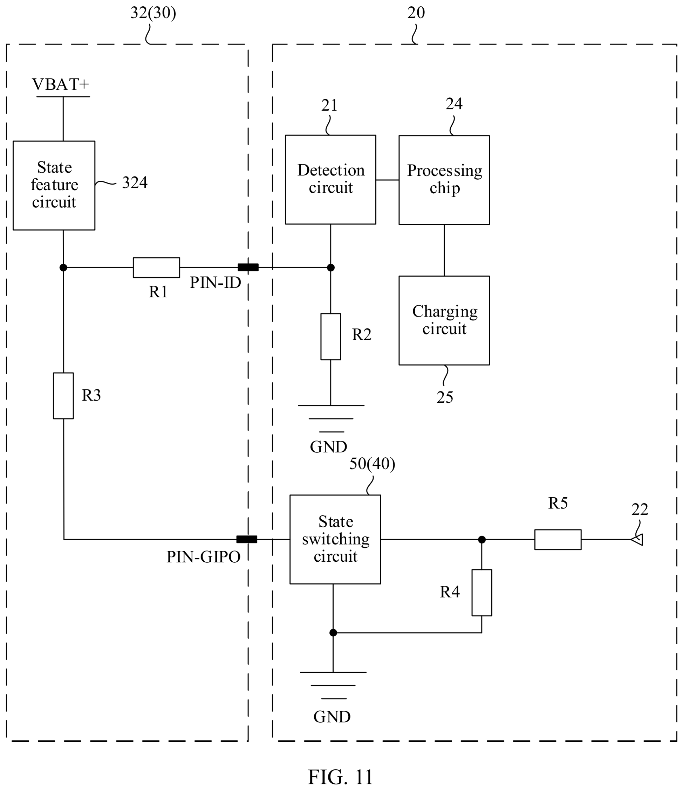

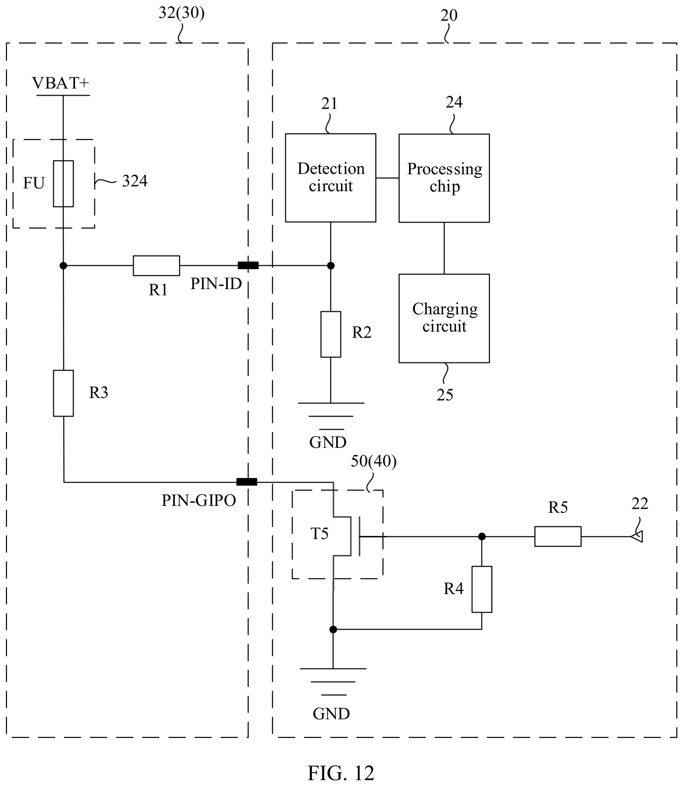

FIG. 9 is a schematic diagram of a structure of a battery and a circuit board according to some other embodiments of this application. FIG. 10 is a schematic diagram of another structure of the battery and the circuit board shown in FIG. 9. FIG. 11 is a schematic diagram of a structure of a battery and a circuit board according to some other embodiments of this application. FIG. 12 is a schematic diagram of another structure of the battery and the circuit board shown in FIG. 11.

As shown in FIG. 9, the protection board 32 of the battery 30 may further include a state switching circuit 50. The state switching circuit 50 may include the foregoing state switching signal terminal 40. It may be understood that, the state switching signal terminal 40 is located on the protection board 32 of the battery 30.

The state switching circuit 50 is coupled to the state feature circuit 324 and the negative electrode VBAT- of the battery core 31. It may be understood that, the state feature circuit 324 and the state switching circuit 50 are coupled to each other, and are jointly connected in series between the positive electrode VBAT+ of the battery core 31 and the negative electrode VBAT- of the battery core 31.

The state switching circuit 50 may output the state switching signal through the state switching signal terminal 40, to control the state feature circuit 324 to perform state switching. Alternatively, the state switching circuit 50 may not output the state switching signal through the state switching signal terminal 40, to control the state feature circuit 324 to remain in the state. For example, the state switching circuit 50 outputs a state switching signal through the state switching signal terminal 40, to control the state feature circuit 324 to switch the first state to the second state. Alternatively, the state switching circuit 50 does not output the state switching signal through the state switching signal terminal 40, to control the state feature circuit 324 to remain in the first state.

As shown in FIG. 9, the circuit board 20 may further include an adjustment signal terminal 22. The adjustment signal terminal 22 is configured to output an adjustment signal after the detection circuit receives the state feature signal provided by the battery 30.

The state switching circuit 50 may also be coupled to the adjustment signal terminal 22 on the circuit board 20 by a communication pin on the BTB connector. For example, the adjustment signal output by the adjustment signal terminal 22 on the circuit board 20 may be transmitted to the state switching circuit 50 on the protection board 32 through an input/output pin PIN-GIPO in the BTB connector.

When the state switching circuit 50 obtains the adjustment signal provided by the adjustment signal terminal 22, the state switching circuit 50 may obtain a state switching signal based on a negative electrode signal provided by a negative electrode VBAT- of the battery core 31, and output the state switching signal through the state switching signal terminal 40.

For example, when the state switching circuit 50 obtains the adjustment signal provided by the adjustment signal terminal 22, the state switching circuit 50 connects the state feature circuit 324 and the negative electrode VBAT- of the battery core 31, and uses a negative electrode signal provided by the negative electrode VBAT-of the battery core 31 as the state switching signal. In this way, the fuse FU is equivalent to being connected in series between the positive electrode VBAT+ of the battery core 31 and the negative electrode VBAT- of the battery core 31. Since a current between the positive electrode VBAT+ of the battery core 31 and the negative electrode VBAT-of the battery core 31 is large, the fuse FU is blown, so that the fuse FU switches from the first state before blowing to the second state after blowing.

For example, before the fuse FU is blown, the detection circuit 21 detects that the voltage value of the state feature signal is greater than or equal to the preset voltage threshold. After the fuse FU is blown, the detection circuit 21 detects that the voltage value of the state feature signal is less than the preset voltage threshold.

It should be noted that, after the state switching circuit 50 outputs the state switching signal through the state switching signal terminal 40, if the detection circuit 21 still detects that the voltage value of the state feature signal is greater than or equal to the preset voltage threshold, the battery 30 is abnormal, or the battery is not compatible with the electronic device 1. In this case, the electronic device 1 may not be powered on, to protect the electronic device 1.

In addition, when the protection board 32 of the battery 30 has a ground terminal GND, the state switching circuit 50 being coupled to the negative electrode VBAT- of the battery core 31 may be replaced by that the state switching circuit 50 being coupled to the ground terminal GND.

As shown in FIG. 10, the state switching circuit 50 may include a fifth transistor T5. A control electrode of the fifth transistor T5 may be coupled to the adjustment signal terminal 22 of the circuit board 20 by a communication pin of the BTB connector, a first electrode of the fifth transistor T5 may be coupled to the state feature circuit 324, and a second electrode of the fifth transistor T5 may be coupled to the negative electrode VBAT- (or the ground terminal GND) of the battery core 31.

When the control electrode of the fifth transistor T5 does not receive an adjustment signal provided by the adjustment signal terminal 22, the fifth transistor T5 is in an off state, and the first electrode of the fifth transistor T5 is disconnected from the second electrode of the fifth transistor T5, so that the state feature circuit 324 is isolated from the negative electrode VBAT- (or the ground terminal GND) of the battery core 31. In this way, the state feature circuit 324 in the first state may remain in the first state under the control of the fifth transistor T5.

When the control electrode of the fifth transistor T5 receives an adjustment signal provided by the adjustment signal terminal 22, the fifth transistor T5 is in an on state, the first electrode of the fifth transistor T5 is connected to the second electrode of the fifth transistor T5, so that the state feature circuit 324 is connected to the negative electrode VBAT- (or the ground terminal GND) of the battery core 31, and uses a negative electrode signal provided by the negative electrode VBAT- of the battery core 31 (or a ground signal provided by the ground terminal GND) as a state switching signal. In this way, under the control of the fifth transistor T5, the state feature circuit 324 in the first state may switch from the first state to the second state.

In some implementations, as shown in FIG. 9 and FIG. 10, the protection board 32 of the battery 30 may further include a fourth resistor R4. The fourth resistor R4 may be connected in series between the input/output pin PIN-GIPO and the negative electrode VBAT- (or the ground terminal GND) of the battery core 31.

The control electrode of the fifth transistor T5 is coupled to the negative electrode VBAT- (or the ground terminal GND) of the battery core 31, to ensure that the control electrode of the fifth transistor T5 is kept in a low-level state. The fourth resistor R4 is configured to prevent an electrostatic surge from damaging the state switching circuit 50.

For example, a resistance value R4' of the fourth resistor R4 may approximately satisfy R4'=1 KΩ, for example, R4'=0.8 KΩ, 0.9 KΩ, 1 KΩ, 1.1 KΩ, or 1.2 KΩ.

In some implementations, as shown in FIG. 9 and FIG. 10, the circuit board 20 may further include a fifth resistor R5. The fifth resistor R5 may be connected in series between the input/output pin PIN-GIPO and the adjustment signal terminal 22.

The fifth resistor R5 can prevent electrical over stress (electrical over stress, EOS) from damaging the circuit board 20 through the input/output pin PIN-GIPO.

For example, a resistance value R5' of the fifth resistor R5 may approximately satisfy R5'=1 KΩ, for example, R5'=0.8 KΩ, 0.9 KΩ, 1 KΩ, 1.1 KΩ, or 1.2 KΩ.

As shown in FIG. 11, FIG. 11 differs from FIG. 9 in that: The battery 30 may not include a state switching circuit 50, and instead, the circuit board 20 includes a state switching circuit 50. The state switching circuit 50 may include the foregoing state switching signal terminal 40. It may be understood that, the state switching signal terminal 40 is located on the circuit board 20.

The state switching circuit 50 is coupled to the ground terminal GND and the adjustment signal terminal 22 on the circuit board 20. For example, the state switching circuit 50 may be coupled to the ground terminal GND and the adjustment signal terminal 22 by two signal traces on the circuit board 20.

The state switching circuit 50 is further coupled to the battery 30. For example, the state switching circuit 50 may be coupled to the state feature circuit 324 on the battery 30 by an input/output pin PIN-GIPO on a BTB connector 323 of the battery 30.

When the adjustment signal terminal 22 outputs an adjustment signal, the state switching circuit 50 receives the adjustment signal, and connects the ground terminal GND on the circuit board 20 and the state feature circuit 324 on the battery 30. The ground signal provided by the ground terminal GND is used as a state switching signal, and the state switching signal is provided to the state feature circuit 324 through the state switching signal terminal 40.

As shown in FIG. 12, the state switching circuit 50 may include a fifth transistor T5. A control electrode of the fifth transistor T5 may be coupled to the adjustment signal terminal 22 of the circuit board 20, a first electrode of the fifth transistor T5 may be coupled to the state feature circuit 324 of the battery 30 by a communication pin (for example, the input/output pin PIN-GIPO) of the BTB connector, and a second electrode of the fifth transistor T5 may be coupled to the ground terminal GND of the circuit board 20.

When the control electrode of the fifth transistor T5 does not receive an adjustment signal provided by the adjustment signal terminal 22, the fifth transistor T5 is in an off state, and the first electrode of the fifth transistor T5 is disconnected from the second electrode of the fifth transistor T5, so that the state feature circuit 324 is isolated from the ground terminal GND. In this way, the state feature circuit 324 in the first state continuously remains in the first state.

When the control electrode of the fifth transistor T5 receives an adjustment signal provided by the adjustment signal terminal 22, the fifth transistor T5 is in an on state, the first electrode of the fifth transistor T5 is connected to the second electrode of the fifth transistor T5, so that the state feature circuit 324 is connected to the ground terminal GND, and uses a ground signal provided by the ground terminal GND as a state switching signal. In this way, the state feature circuit in the first state 324 switches from the first state to the second state under the control of the state switching signal, and in this case the battery 30 changes from a new battery to an old battery.

In some implementations, the adjustment signal terminal 22 may be coupled to the detection circuit 21. In this way, the adjustment signal terminal 22 can learn whether the detection circuit 21 obtains the feature signal provided by the battery 30.

When the adjustment signal terminal 22 determines that the detection circuit 21 obtains the state feature signal provided by the battery 30, regardless of whether the state feature signal is a first state feature signal or a second state feature signal, the adjustment signal terminal 22 outputs an adjustment signal, to enable the state switching circuit 50 to output a state switching signal.

In some other examples, the adjustment signal terminal 22 may not be coupled to the detection circuit 21. The adjustment signal terminal 22 may be set with delayed triggering after the electronic device 1 is powered on, and automatically output an adjustment signal after reaching a delay time. Delay duration may be greater than duration required by the battery 30 to provide a state feature signal to the detection circuit 21 on the circuit board 20 after the electronic device 1 is powered on, to ensure that the detection circuit 21 can obtain, before the adjustment signal terminal 22 outputs an adjustment signal, a feature signal provided by the battery 30.

As shown in FIG. 7, regardless of whether the state switching circuit 50 belongs to the circuit board 20 or belongs to the protection board 32 of the battery 30, the state switching circuit 50 outputs a state switching signal to the state feature circuit 324 of the battery 30 after the adjustment signal terminal 22 outputs an adjustment signal to the state switching circuit 50.

When the state feature circuit 324 obtains, in the first state, the state switching signal provided by the state switching circuit 50, a state of the state feature circuit 324 can be switched from the first state to the second state. When the state feature circuit 324 obtains, in the second state, the state switching signal provided by the state switching circuit 50, a state of the state feature circuit 324 is maintained in the second state.

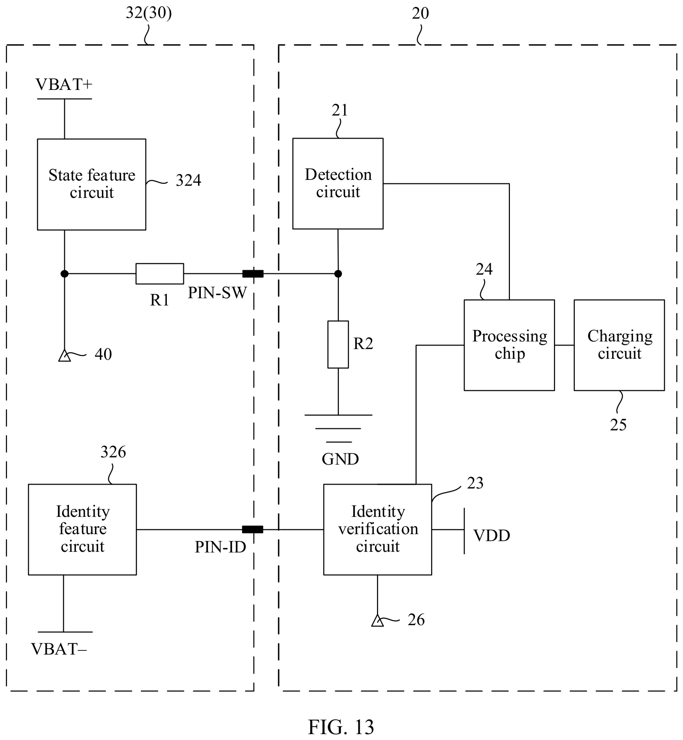

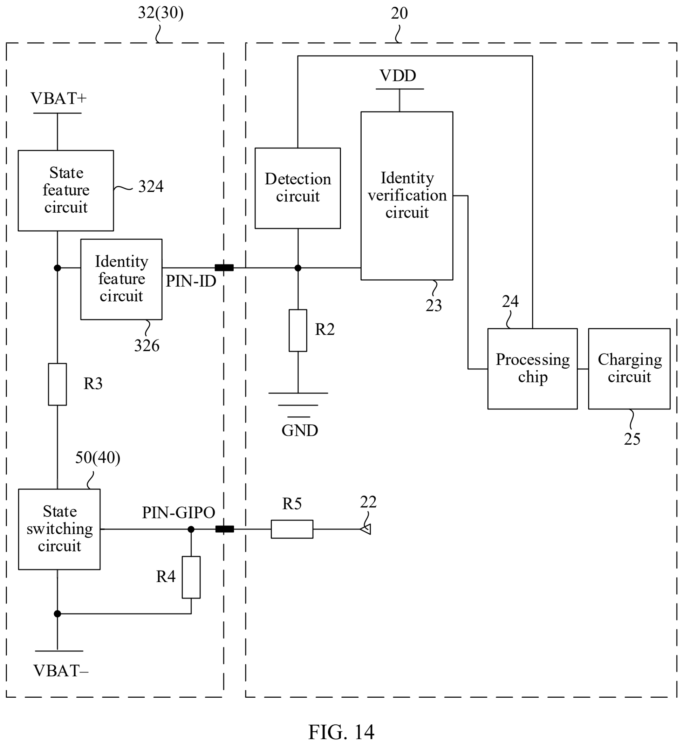

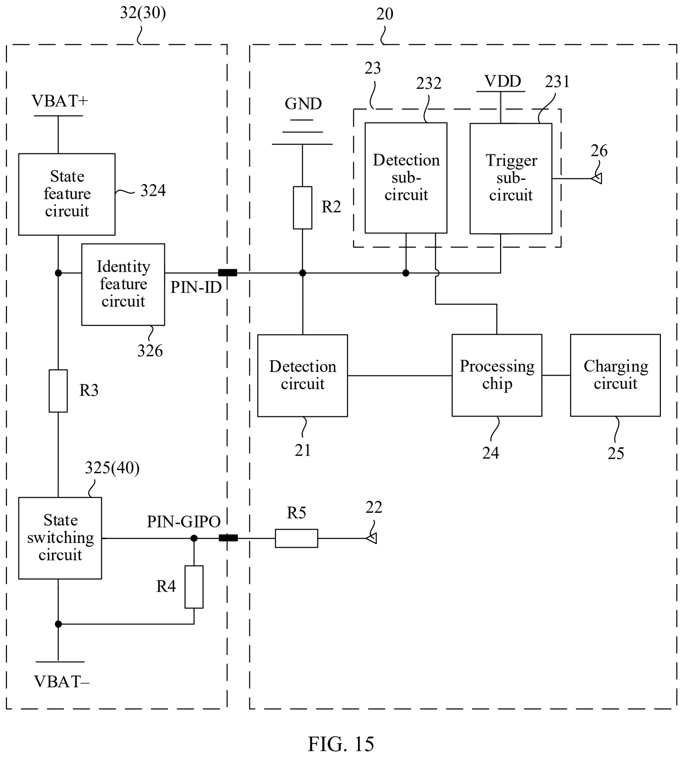

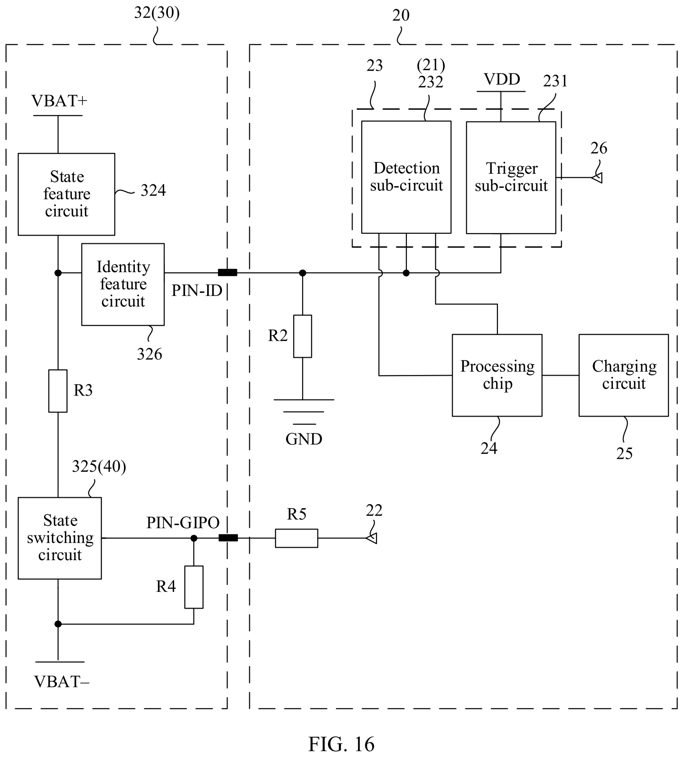

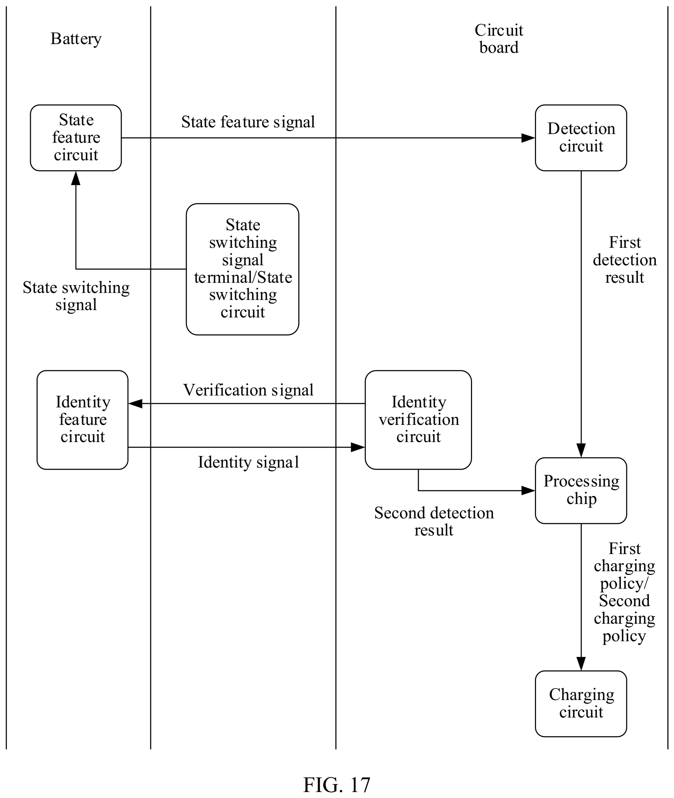

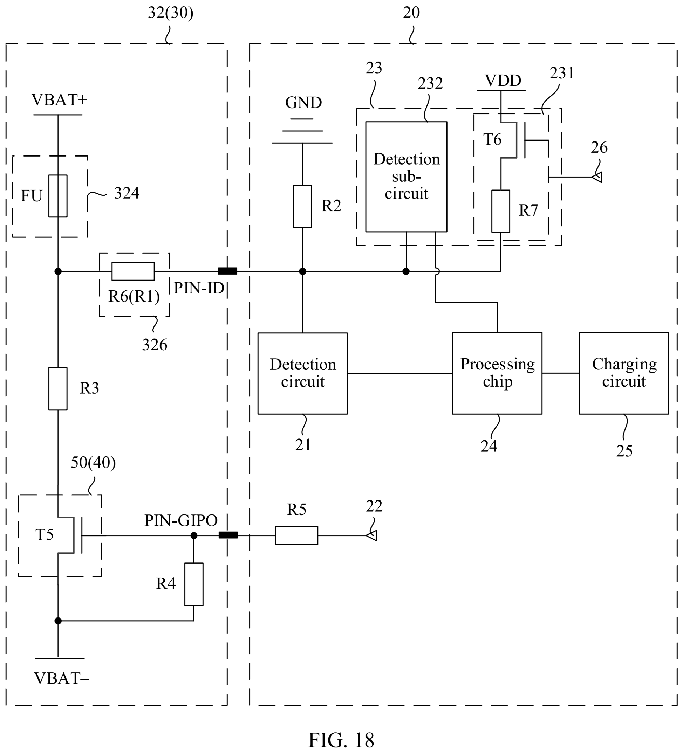

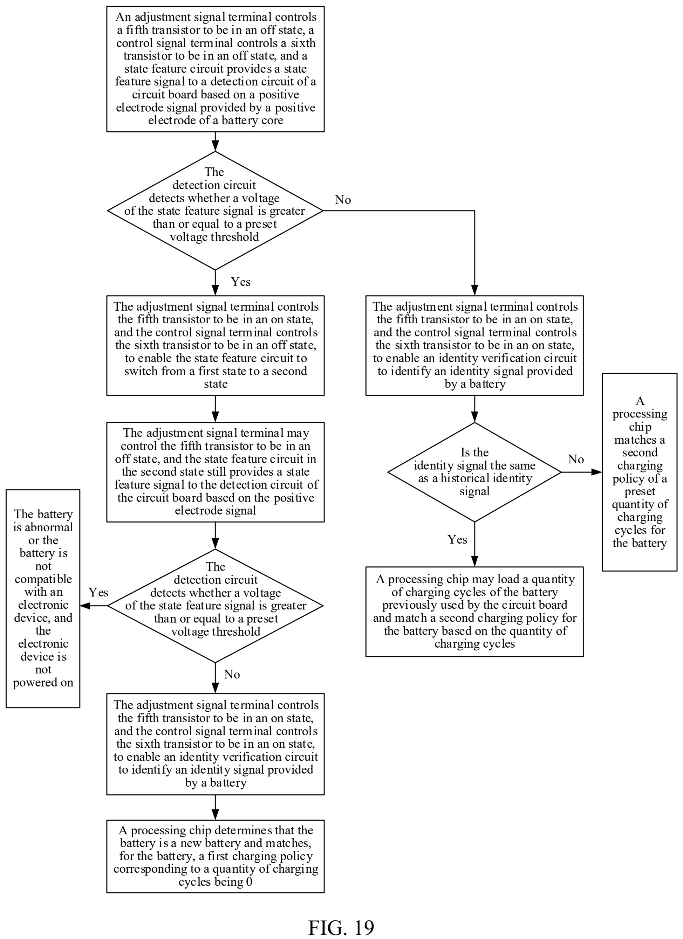

FIG. 13 is a schematic diagram of a structure of a battery and a circuit board according to some other embodiments of this application. FIG. 14 is a schematic diagram of a structure of a battery and a circuit board according to some other embodiments of this application. FIG. 15 is a schematic diagram of a structure of a battery and a circuit board according to some other embodiments of this application. FIG. 16 is a schematic diagram of a structure of a battery and a circuit board according to some other embodiments of this application. FIG. 17 is a schematic diagram of a signal trend of a battery charging method according to some other embodiments of this application. FIG. 18 is a schematic diagram of another structure of the battery and the circuit board shown in FIG. 15. FIG. 19 is a flowchart of a battery charging method implemented in the battery and the circuit board shown in FIG. 18.

As shown in FIG. 13, the protection board 32 may further include an identity feature circuit 326. The identity feature circuit 326 is coupled to a negative electrode VBAT- (or a ground terminal GND) of the battery core 31.

The identity feature circuit 326 on the protection board 32 may further be coupled to the circuit board 20 by a communication pin on the BTB connector 323, so that the identity feature circuit 326 outputs an identity signal to the circuit board 20 through the communication pin on the BTB connector 323. For example, the identity feature circuit 326 on the protection board 32 may be coupled to the identity verification circuit 23 on the circuit board 20 by an identity authentication pin PIN-ID on the BTB connector 323.

The identity feature circuit 326 provides a unique identity signal to the circuit board 20, so that after receiving the identity signal, the circuit board 20 can determine whether the identity signal provided by a current battery 30 is the same as a historical identity signal of a battery previously assembled on the electronic device 1. If the identity signal provided by the current battery 30 is the same as the historical identity signal, it may be considered that the current battery 30 is a battery assembled before the electronic device 1 is disassembled. If the identity signal provided by the current battery 30 is different from the historical identity signal, it may be considered that the current battery 30 is not a battery assembled before the electronic device 1 is disassembled.

In a scenario in which the protection board 32 includes both the state feature circuit 324 and the identity feature circuit 326, as shown in FIG. 13, when the identity feature circuit 326 is coupled to the circuit board 20 by the identity authentication pin PIN-ID on the BTB connector 323, the state feature circuit 324 may not be coupled to the circuit board 20 by the identity authentication pin PIN-ID, and instead, may be coupled to the detection circuit 21 of the circuit board 20 by another communication pin on the BTB connector 323. For example, by reforming the BTB connector to newly add a state communication pin, the state feature circuit 324 may be coupled to the detection circuit 21 of the circuit board 20 by the state communication pin. Alternatively, a function of the test pin PIN-SW for factory testing is canceled, so that the state feature circuit 324 may be coupled to the detection circuit 21 of the circuit board 20 by the test pin PIN-SW.

It may be understood that, as shown in FIG. 13, the state feature circuit 324 and the identity feature circuit 326 do not share a same communication pin. When the state feature circuit 324 and the identity feature circuit 326 do not share a same communication pin, the circuit board 20 may first determine a new or old state of the battery 30 by using the state feature signal provided by the state feature circuit 324, and then determine, by using the identity signal provided by the identity feature circuit 326, whether the battery 30 is a battery previously assembled on the electronic device 1. Alternatively, the circuit board 20 may first determine, by using the identity signal provided by the identity feature circuit 326, whether the battery 30 is a battery previously assembled on the electronic device 1, and then determine a new or old state of the battery 30 by using the state feature signal provided by the state feature circuit 324. The circuit board 20 may further determine a new or old state of the battery 30 by using the state feature signal provided by the state feature circuit 324, and meanwhile, determine, by using the identity signal provided by the identity feature circuit 326, whether the battery 30 is a battery previously assembled on the electronic device 1.

As shown in FIG. 13, the circuit board 20 may further include an identity verification circuit 23. The circuit board 20 may further include a power signal terminal VDD and a control signal terminal 26. On the circuit board 20, the identity verification circuit 23 may be separately coupled to a power signal terminal VDD and a control signal terminal 26.

For example, the power signal terminal VDD may provide a power signal to the identity verification circuit 23, and a voltage value of the power signal may be less than a voltage value of a positive electrode signal output by the positive electrode VBAT+ of the battery core 31. For example, the voltage value of the power signal is +1.8 V, and the voltage value of the positive electrode signal output by the positive electrode VBAT+ of the battery core 31 is +5 V.

The identity verification circuit 23 may be coupled to the battery 30. For example, the identity verification circuit 23 on the circuit board 20 may be coupled to the identity feature circuit 326 of the battery 30 by an identity authentication pin PIN-ID of the BTB connector 323 of the battery 30.

The identity verification circuit 23 may be coupled to the power signal terminal VDD. The identity verification circuit 23 is further coupled to the identity feature circuit 326, and the identity feature circuit 326 is coupled to the negative electrode VBAT- (or the ground terminal GND) of the battery core 31. It may be understood that, the identity verification circuit 23 is coupled to the identity feature circuit 326, and the identity verification circuit 23 and the identity feature circuit 326 are connected in series between the power signal terminal VDD and the negative electrode VBAT- (or the ground terminal GND) of the battery core 31.

The power signal terminal VDD outputs a power signal. For example, a voltage of the power signal may approximately satisfy 1.2 V≤VDD≤3 V. For example, the voltage of the power signal is 1.2 V, 1.5 V, 1.8 V, 2.0 V, 2.2 V, 2.5 V, 2.8 V, or 3 V.

When receiving a control signal provided by the control signal terminal 26, the identity verification circuit 23 may connect the power signal terminal VDD and the identity feature circuit 326 of the battery 30, and provide the power signal provided by the power signal terminal VDD to the identity feature circuit 326 as a verification signal. When the identity feature circuit 326 receives the verification signal, the identity feature circuit 326 is equivalent to being connected in series between the power signal terminal VDD and the negative electrode VBAT- (or the ground terminal GND) of the battery core 31. A voltage on the identity feature circuit 326 is used as an identity signal to be provided to the identity verification circuit 23 on the circuit board 20 through the BTB connector.

When receiving the identity signal provided by the identity feature circuit 326, the identity verification circuit 23 compares the identity signal with a historical identity signal, to obtain a second detection result indicating that the identity signal is the same as or different from the historical identity signal. After obtaining the second detection result, the identity verification circuit 23 may output the second detection result to the processing chip 24.

As shown in FIG. 13, when the state feature circuit 324 and the identity feature circuit 326 do not share a same communication pin, the detection circuit 21 and the identity verification circuit 23 on the circuit board 20 may be respectively coupled to two communication pins of the BTB connector 323.

For example, the state feature circuit 324 is coupled to a test pin PIN-SW of the BTB connector 323, and the detection circuit 21 on the circuit board 20 is also coupled to the test pin PIN-SW of the BTB connector 323. The identity feature circuit 326 is coupled to an identity authentication pin PIN-ID of the BTB connector 323, and the identity verification circuit 23 on the circuit board 20 is also coupled to the identity authentication pin PIN-ID of the BTB connector 323.

As shown in FIG. 14, differences between FIG. 14 and FIG. 13 include: When the identity feature circuit 326 is coupled to the circuit board 20 by the identity authentication pin PIN-ID on the BTB connector 323, the state feature circuit 324 may also be coupled to the detection circuit 21 by the identity authentication pin PIN-ID. For example, the state feature signal and the identity signal are transmitted to the circuit board 20 through the identity authentication pin PIN-ID in a time-sharing manner. For example, after the state feature circuit 324 first outputs a state feature signal and transfers the state feature signal to the detection circuit 21 of the circuit board 20 through the identity authentication pin PIN-ID, the identity feature circuit 326 then outputs an identity signal and transfers the identity signal to the identity verification circuit 23 of the circuit board 20 through the identity authentication pin PIN-ID.

It may be understood that, as shown in FIG. 12, the state feature circuit 324 and the identity feature circuit 326 may share a same communication pin.

Based on this, the detection circuit 21 and the identity verification circuit 23 on the circuit board 20 may be coupled to a same communication pin (for example, the identity authentication pin PIN-ID) of the BTB connector 323.

As shown in FIG. 14, when the protection board 32 further includes a state switching circuit 50, the state switching circuit 50 may also be connected in series between the identity feature circuit 326 and the negative electrode VBAT- of the battery core 31.

When the adjustment signal terminal 22 on the circuit board 20 outputs an adjustment signal, and the state switching circuit 50 receives the adjustment signal, the identity feature circuit 326 is connected to the negative electrode VBAT- (or the ground terminal GND) of the battery core 31, so that the identity feature circuit 326 can output an identity signal to the identity verification circuit 23. When the adjustment signal terminal 22 on the circuit board 20 does not output an adjustment signal, and/or the state switching circuit 50 does not receive an adjustment signal, the identity feature circuit 326 is disconnected from the negative electrode VBAT- (or the ground terminal GND) of the battery core 31. As a result, the identity feature circuit 326 cannot output an identity signal to the identity verification circuit 23.

When the state switching circuit 50 receives the adjustment signal, the state feature circuit 324 is switched to the second state. Therefore, it can be ensured that the identity feature circuit 326 outputs an identity signal when the state feature circuit 324 is in the second state. When the state feature circuit 324 is in the second state, the positive electrode VBAT+ of the battery core 31 is disconnected from the identity feature circuit 326 and the identity authentication pin PIN-ID. In this way, a positive electrode signal provided by the positive electrode VBAT+ of the battery core 31 can be prevented from affecting precision of an identity signal output by the identity feature circuit 326 in response to a verification signal, thereby improving accuracy of identity detection performed by the circuit board 20 on the battery 30.

As shown in FIG. 15, the identity verification circuit 23 may include a trigger sub-circuit 231 and a detection sub-circuit 232.

The trigger sub-circuit 231 may be separately coupled to the power signal terminal VDD and the control signal terminal 26 on the circuit board 20. The trigger sub-circuit 231 may further be coupled to the identity feature circuit 326 of the battery 30 by an identity authentication pin PIN-ID of the BTB connector of the battery 30.

If the trigger sub-circuit 231 does not receive a control signal provided by the control signal terminal 26, the trigger sub-circuit 231 may not output a verification signal. Therefore, the identity feature circuit 326 of the battery 30 also does not provide an identity signal.

When the trigger sub-circuit 231 receives a control signal provided by the control signal terminal 26, the trigger sub-circuit 231 may output a verification signal based on a power signal provided by the power signal terminal VDD. Therefore, the identity feature circuit 326 of the battery 30 may provide, in response to the verification signal, an identity signal to the circuit board 20 through the identity authentication pin PIN-ID of the BTB connector 323 of the battery 30.

The detection sub-circuit 232 may be coupled to the identity authentication pin PIN-ID of the BTB connector 323 of the battery 30. The detection sub-circuit 232 may obtain, at the identity authentication pin PIN-ID, the identity signal provided by the battery 30.

The detection sub-circuit 232 may store a historical identity signal. The historical identity signal refers to an identity signal of a battery previously installed on the electronic device. It may be understood that, the historical identity signal is an identity signal of a battery previously obtained by the detection sub-circuit 232.

By comparing the identity signal with the historical identity signal, the detection sub-circuit 232 may obtain a second detection result indicating that the identity signal is the same as or different from the historical identity signal. That the identity signal is the same as the historical identity signal may indicate that a battery reinstalled after the electronic device 1 is disassembled is a battery previously used by the electronic device 1. That the identity signal is different from a historical identity signal may indicate that a battery reinstalled after the electronic device 1 is disassembled is not a battery previously used by the electronic device 1.

The detection sub-circuit 232 may be coupled to the processing chip 24, and provide, to the processing chip 24, a second detection result indicating that the identity signal is the same as or different from the historical identity signal. After receiving the second detection result, the processing chip 24 determines that the battery reinstalled after the electronic device 1 is disassembled is a battery used by the electronic device 1 before the disassembly or a new battery.

As shown in FIG. 16, when the state feature circuit 324 and the identity feature circuit 326 of the battery 30 share the identity authentication pin PIN-ID of the BTB connector 323 of the battery 30, the detection sub-circuit 232 and the detection circuit 23 are both coupled to the identity authentication pin PIN-ID on the BTB connector 323 of the battery 30, to be coupled to the processing chip 24. Therefore, the detection sub-circuit 232 in the identity verification circuit 23 may be reused as a detection circuit 21.

For example, when the state feature circuit 324 first outputs a feature signal and transfers the feature signal to the detection circuit 21 of the circuit board 20 through the identity authentication pin PIN-ID, the detection sub-circuit 232 obtains the feature signal provided by the battery 30, obtains a first detection result indicating that the feature signal is a first feature signal or a second feature signal, and outputs the first detection result to the processing chip 24. Then, when the identity feature circuit 326 further outputs an identity signal and transfers the identity signal to the identity verification circuit 23 of the circuit board 20 through the identity authentication pin PIN-ID, the detection sub-circuit 232 obtains the identity signal provided by the battery 30, obtains a second detection result indicating that the identity signal is the same as or different from a historical identity signal, and outputs the second detection result to the processing chip 24.

When the first detection result received by the processing chip 24 indicates that the battery 30 is a new battery, a battery that is reinstalled after the electronic device 1 is disassembled is inevitably a new battery, and a charging count of the new battery is 0. Therefore, the processing chip 24 may directly match a first charging policy corresponding to the charging count being 0, and output the first charging policy to the charging circuit 25. When receiving the first charging policy provided by the processing chip 24, the charging circuit 25 may process an initial charging voltage to obtain a first charging voltage conforming to the first charging policy and process an initial charging current to obtain a first charging current conforming to the first charging policy, and the charging circuit 25 provides the first charging voltage and the first charging current to the battery 30, to charge the battery 30.

When the processing chip 24 determines that the battery 30 is an old battery, the second charging policy may include a plurality of second charging sub-policies. Different second charging sub-policies may correspond to different charging counts. It may be understood that, a same old battery is charged by using different second charging sub-policies, and after comparison, it is found that a second charging sub-policy corresponding to a charging count of the old battery has the best charging effect and/or safety for the old battery.

For example, the second charging policy may include a second charging sub-policy 1 and a second charging sub-policy 2. When the charging count is 150, the processing chip 24 may match the second charging sub-policy 1, and when the charging count is 300, the processing chip 24 may match the second charging sub-policy 2. A charging voltage of the second charging sub-policy 1 may be greater than a charging voltage of the second charging sub-policy 2, and/or a charging current of the second charging sub-policy 1 may be greater than a charging current of the second charging sub-policy 2.

When the first detection result received by the processing chip 24 indicates that the battery 30 is an old battery, the electronic device 1 may identify, based on the received second detection result, whether the battery that is reinstalled after the electronic device 1 is disassembled is a battery previously used by the electronic device 1. When the battery reinstalled after the electronic device 1 is disassembled is not a battery previously used by the electronic device 1, the processing chip 24 cannot accurately determine a charging count of the battery 30. In this case, the processing chip 24 may match the second charging policy for the battery 30 by using a preset charging count (for example, 200), and output the second charging policy to the charging circuit 25. When the battery reinstalled after the electronic device 1 is disassembled is not a battery previously used by the electronic device 1, the processing chip 24 may internally store a charging count of the previously used battery on the electronic device 1, so that the processing chip 24 can accurately determine a charging count of the battery 30. Therefore, the processing chip may match the second charging policy for the battery 30 more accurately, and output the second charging policy to the charging circuit 25.

When receiving the second charging policy provided by the processing chip 24, the charging circuit 25 may process an initial charging voltage to obtain a second charging voltage conforming to the second charging policy and process an initial charging current to obtain a second charging current conforming to the second charging policy, and the charging circuit 25 provides the second charging voltage and the second charging current to the battery 30, to charge the battery 30.

It should be noted that the processing chip 24 internally stores a charging count of a previously used battery on the electronic device 1 requires that a circuit board of the electronic device 1 is not replaced during disassembly and maintenance. If a circuit board of the electronic device 1 is replaced, the processing chip 24 does not have a charging count of a previously used battery on the electronic device 1.

As shown in FIG. 17, FIG. 17 differs from FIG. 10 in that: The electronic device 1 further outputs a verification signal to the identity feature circuit 326 of the battery 30 by using the identity verification circuit 23 of the circuit board 20, to enable the identity feature circuit 326 to output an identity signal to the identity verification circuit 23 in response to the verification signal. When receiving the identity signal, the identity verification circuit 23 compares the identity signal with a historical identity signal, to obtain a second detection result indicating that the identity signal is the same as or different from the historical identity signal. When the first detection result indicates that the battery is an old battery, the processing chip 24 determines, based on the second detection result, whether the old battery is a battery previously used by the electronic device 1. When the old battery is not a battery previously used by the electronic device 1, a preset charging count is used to match a second charging policy for the battery 30. When the old battery is a battery previously used by the electronic device 1, a second charging policy corresponding to an actual charging count for the battery is matched for the battery 30.

In this way, when the electronic device 1 has neither a motherboard nor a battery replaced, an appropriate second charging policy can be accurately matched for the battery 30, to further avoid a risk of damage during charging of an old battery 30 while improving efficiency of charging the battery 30.

As shown in FIG. 18, the identity feature circuit 326 may include a sixth resistor R6. One terminal of a sixth resistor R6 is coupled to the negative electrode VBAT- of the battery core 31, and an other terminal of the sixth resistor R6 is coupled to a communication pin of the BTB connector 323. For example, the other terminal of the sixth resistor R6 is coupled to the identity authentication pin PIN-ID on the BTB connector 323.

By providing a verification signal to the sixth resistor R6, the identity verification circuit 23 enables the other terminal of the sixth resistor R6 to have a higher voltage and output a voltage signal as an identity signal to the identity verification circuit 23 through the identity authentication pin PIN-ID, to enable the identity verification circuit 23 to determine an identity signal of the battery 30 based on the identity signal.

When the state feature circuit 324 and the identity feature circuit 326 share an identity authentication pin PIN-ID, a connection relationship of the first resistor R1 in the foregoing voltage divider circuit is the same as a connection relationship of the sixth resistor R6. Therefore, the sixth resistor R6 may be reused as the first resistor R1.

In a stage in which the state feature circuit 324 outputs a state feature signal and transfers the state feature signal to the detection circuit 21 of the circuit board 20 through the identity authentication pin PIN-ID, the sixth resistor R6 and the second resistor R2 jointly form a voltage divider circuit, to provide a state feature signal obtained after voltage division to the detection circuit 21 of the circuit board 20.

In a stage in which the identity feature circuit 326 outputs an identity signal and transfers the identity signal to the identity verification circuit 23 of the circuit board 20 through the identity authentication pin PIN-ID, the sixth resistor R6 outputs an identity signal to the identity verification circuit 23 of the circuit board 20.

By reusing the sixth resistor R6 as the first resistor R1, a quantity of and a layout space of resistors in the protection board 32 can be saved, and costs of the battery 30 can also be lowered.

As shown in FIG. 18, the trigger sub-circuit 231 may include a sixth transistor T6 and a seventh resistor R7.

A control electrode of the sixth transistor T6 is coupled to the control signal terminal 26, a first electrode of the sixth transistor T6 is coupled to the power signal terminal VDD, and a second electrode of the sixth transistor T6 may be coupled to the identity authentication pin PIN-ID on the BTB connector 323.

The seventh resistor R7 may be connected in series between the second electrode of the sixth transistor T6 and the identity authentication pin PIN-ID on the BTB connector 323. Alternatively, the seventh resistor R7 may be connected in series between the first electrode of the sixth transistor T6 and the power signal terminal VDD.

When the control electrode of the sixth transistor T6 does not receive a control signal provided by the control signal terminal 26, the first electrode of the sixth transistor T6 is disconnected from the second electrode of the sixth transistor T6, so that the power signal terminal VDD is isolated from the identity authentication pin PIN-ID on the BTB connector 323, and the sixth resistor R6 of the identity feature circuit 326 does not receive a verification signal.

When the control electrode of the sixth transistor T6 receives a control signal provided by the control signal terminal 26, the first electrode of the sixth transistor T6 is connected to the second electrode of the sixth transistor T6, so that the power signal terminal VDD is connected to the identity authentication pin PIN-ID on the BTB connector 323, and a power signal provided by the power signal terminal VDD is used as a verification signal.

When the sixth resistor R6 of the identity feature circuit 326 receives a verification signal, the sixth resistor R6 and the seventh resistor R7 are jointly connected in series between the power signal terminal VDD and the negative electrode VBAT- of the battery core 31. The detection sub-circuit 232 may obtain a divided voltage, between the sixth resistor R6 and the seventh resistor R7, of the voltage of the power signal provided by the power signal terminal VDD as an identity signal.

As shown in FIG. 19, during power-on of the electronic device 1, the adjustment signal terminal 22 controls the fifth transistor T5 to be in an off state, the control signal terminal 26 controls the sixth transistor T6 to be in an off state, and the state feature circuit 324 provides a state feature signal to the detection circuit 21 of the circuit board 20 based on a positive electrode signal provided by the positive electrode VBAT+ of the battery core 31. The detection circuit 21 detects a voltage of the state feature signal, and when the voltage of the state feature signal is greater than or equal to a preset voltage threshold, outputs a first detection result indicating that the state feature signal is a first state feature signal, or when the voltage of the state feature signal is less than the preset voltage threshold, outputs a first detection result indicating that the state feature signal is a second state feature signal.

When the detection circuit 21 outputs the first detection result indicating that the state feature signal is the first state feature signal, the adjustment signal terminal 22 controls the fifth transistor T5 to be in an on state, and the control signal terminal 26 controls the sixth transistor T6 to be in an off state, so that the state feature circuit 324 is connected in series between the positive electrode VBAT+ of the battery core 31 and the negative electrode VBAT- of the battery core 31, and the fuse FU of the state feature circuit 324 is blown to complete switching of the state feature circuit 324 from the first state to the second state. Then, the adjustment signal terminal 22 may control the fifth transistor T5 to be in an off state, and the state feature circuit 324 in the second state still provides a state feature signal to the detection circuit 21 of the circuit board 20 based on the positive electrode signal. The detection circuit 21 detects a voltage of the state feature signal. If the voltage of the state feature signal is still greater than or equal to the preset voltage threshold, it is considered that the battery 30 is abnormal, or the battery 30 is not compatible with the electronic device 1, and the electronic device 1 may not be powered on. If the voltage of the state feature signal is less than the preset voltage threshold, the adjustment signal terminal 22 controls the fifth transistor T5 to be in an on state, and the control signal terminal 26 controls the sixth transistor T6 to be in an on state, to enable the identity verification circuit 23 to identify an identity signal provided by the battery 30. The identity verification circuit outputs a second detection result indicating that the battery is not a battery previously used by the electronic device 1. The processing chip 24 may determine, based on the first detection result indicating that the state feature signal is the first state feature signal and the second detection result indicating that the battery is not a battery previously used by the electronic device 1, that the battery 30 is a new battery, and match a first charging policy corresponding to that a charging count is 0 for the battery 30. Subsequently, the charging circuit 25 charges the battery 30 based on the first charging policy, and then, the circuit board 20 recounts a charging count of the battery 30, and adjusts a charging policy of the battery 30 based on the charging count.

If the detection circuit 21 outputs the first detection result indicating that the state feature signal is the second state feature signal, and the adjustment signal terminal 22 controls the fifth transistor T5 to be in an on state, and the control signal terminal 26 controls the sixth transistor T6 to be in an on state, to enable the identity verification circuit 23 to identify an identity signal provided by the battery 30. The identity verification circuit may output a second detection result indicating that the identity signal is different from a historical identity signal, or the identity verification circuit may output a second detection result indicating that the identity signal is the same as a historical identity signal. If the identity verification circuit outputs the second detection result indicating that the identity signal is different from the historical identity signal, the processing chip 24 considers that the battery 30 is not a battery previously used by the electronic device 1, and the battery is replaced after the electronic device 1 is disassembled, and matches a second charging policy of a preset charging count for the battery 30, and subsequently, the charging circuit 25 charges the battery 30 based on the second charging policy. If the identity verification circuit outputs the second detection result indicating that the identity signal is the same as the historical identity signal, the processing chip 24 considers that the battery is a battery previously used by the electronic device 1, and the battery is not replaced after the electronic device 1 is disassembled, and the processing chip 24 may load a charging count of the battery previously used by the circuit board 20, and match a second charging policy for the battery 30 based on the charging count. Subsequently, the charging circuit 25 charges the battery 30 based on the second charging policy.

In conclusion, in embodiments of this application, when a new battery is installed after the electronic device 1 is disassembled, the electronic device 1 can identify the new battery and charge the new battery by using the first charging policy, to improve a charging effect of the new battery and improve the charging experience of a user. When an old battery is installed after the electronic device 1 is disassembled, the electronic device 1 can identify the old battery and charge the old battery by using the second charging policy, so that charging safety of the old battery can be protected while prolonging the service life of the battery 30. Further, if the old battery installed after the electronic device 1 is disassembled is a battery previously used by the electronic device 1, a charging count of the battery 30 can be accurately determined, and an appropriate second charging policy can be matched for the battery 30, to avoid a risk of damage during charging of an old battery 30 while improving efficiency of charging the battery 30.

Embodiments of this application further provide a computer-readable storage medium. The computer-readable storage medium includes computer instructions. When the computer instructions are run on the foregoing electronic device 1, the electronic device is enabled to perform the functions or steps performed by the electronic device 1 for charging a battery in the foregoing embodiments.

Embodiments of this application further provide a computer program product. When the computer program product is run on a computer, the computer is enabled to perform the functions or steps performed by the electronic device 1 for charging a battery in the foregoing method embodiments.

Through the descriptions of the foregoing implementations, a person skilled in the art may clearly understand that, for the purpose of convenient and brief description, only division of the foregoing functional modules is used as an example for description. In actual application, the foregoing functions may be allocated to and completed by different functional modules according to requirements. That is, an inner structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate components may or may not be physically separate, and components displayed as units may be one or more physical units, may be located in one place, or may be distributed on a plurality of different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a read-only memory (read only memory, ROM), a random-access memory (random access memory, RAM), a magnetic disk, or an optical disc.

The foregoing content is only specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A battery, comprising:
a battery core; and
a protection board, comprising:
a state feature circuit, coupled to a positive electrode of the battery core, and further coupled to a circuit board, wherein the state feature circuit is in a first state or a second state, and the state feature circuit is configured to: based on a positive electrode signal provided by the positive electrode of the battery core, output, in the first state, a first state feature signal to the circuit board, or output, in the second state, a second state feature signal to the circuit board; and
the state feature circuit is further coupled to a state switching signal terminal, and the state feature circuit is further configured to switch from the first state to the second state when the state feature circuit is in the first state and obtains a state switching signal provided by the state switching signal terminal, wherein the switching is irreversible.

2. The battery according to claim 1, wherein the state feature circuit comprises a fuse.

3. The battery according to claim 1 or 2, wherein the protection board further comprises:
a state switching circuit, coupled to the state feature circuit and a negative electrode or a ground terminal of the battery core, and further coupled to the circuit board, wherein the state switching circuit comprises the state switching signal terminal, and the state switching circuit is configured to: when receiving an adjustment signal provided by the circuit board, output the state switching signal by using the state switching signal terminal.

4. The battery according to claim 3, wherein the state switching circuit comprises a transistor, wherein a control electrode of the transistor is coupled to the circuit board, a first electrode of the transistor is coupled to the state feature circuit, and a second electrode of the transistor is coupled to the negative electrode or the ground terminal of the battery core.

5. The battery according to claim 1, wherein the protection board further comprises:
an identity feature circuit, coupled to a negative electrode or a ground terminal of the battery core, and further coupled to the circuit board, wherein the identity feature circuit is configured to output an identity signal when receiving a verification signal provided by the circuit board.

6. The battery according to claim 5, wherein the identity feature circuit comprises a resistor, wherein one terminal of the resistor is coupled to the circuit board, and an other terminal of the resistor is coupled to the negative electrode or the ground terminal of the battery core.

7. The battery according to claim 5, wherein the identity feature circuit is connected in series between the state feature circuit and the circuit board; and
the identity feature circuit and the state feature circuit share a same communication pin to be coupled to the circuit board.

8. The battery according to claim 7, wherein the battery comprises a state switching circuit, wherein the identity feature circuit is coupled to the state feature circuit, and
the state switching circuit is further configured to form a path between the identity feature circuit and the negative electrode or the ground terminal of the battery core when receiving an adjustment signal provided by the circuit board.

9. A circuit board, comprising:
a detection circuit, coupled to a battery, wherein the detection circuit is configured to: obtain a state feature signal provided by the battery, and output a first detection result indicating that the state feature signal is a first state feature signal or a second state feature signal;
a processing chip, coupled to the detection circuit, wherein the processing chip is configured to: output a first charging policy when receiving the first detection result indicating that the state feature signal is the first state feature signal, or output a second charging policy when receiving the first detection result indicating that the state feature signal is the second state feature signal, wherein a charging voltage corresponding to the first charging policy is greater than a charging voltage corresponding to the second charging policy, and/or a charging current corresponding to the first charging policy is greater than a charging current corresponding to the second charging policy; and
a charging circuit, coupled to the processing chip, and further coupled to the battery, wherein the charging circuit is configured to charge, when receiving the first charging policy provided by the processing chip, the battery based on the first charging policy; or charge, when receiving the second charging policy provided by the processing chip, the battery based on the second charging policy.

10. The circuit board according to claim 9, further comprising:
an adjustment signal terminal, coupled to the battery, wherein the adjustment signal terminal is configured to output an adjustment signal to the battery.

11. The circuit board according to claim 9, further comprising:
a state switching circuit, coupled to the battery, a ground terminal, and an adjustment signal terminal separately, wherein the state switching circuit comprises a state switching signal terminal, and the state switching circuit is configured to: when receiving an adjustment signal provided by the adjustment signal terminal, obtain a state switching signal based on a ground signal provided by the ground terminal, and output the state switching signal to the battery by using the state switching signal terminal.

12. The circuit board according to any one of claims 9 to 11, further comprising:
an identity verification circuit, coupled to a power signal terminal and a control signal terminal, and coupled to the battery, wherein the identity verification circuit is configured to: when receiving a control signal provided by the control signal terminal, output a verification signal to the battery based on a power signal provided by the power signal terminal;
the identity verification circuit is further configured to: obtain an identity signal provided by the battery in response to the verification signal, and output a second detection result indicating that the identity signal is the same as or different from a historical identity signal; and
the processing chip is further coupled to the identity verification circuit, and the processing chip is further configured to: when receiving the second detection result indicating that the identity signal is the same as the historical identity signal, output the second charging policy matching a charging count corresponding to the historical identity signal.

13. The circuit board according to claim 12, wherein the identity verification circuit comprises:
a trigger sub-circuit, coupled to the power signal terminal and the control signal terminal, and coupled to the battery, wherein the trigger sub-circuit is configured to: when receiving a control signal provided by the control signal terminal, output a verification signal to the battery based on a power signal provided by the power signal terminal; and
a detection sub-circuit, coupled to the processing chip, and further coupled to the battery, wherein the detection sub-circuit is configured to: obtain an identity signal provided by the battery in response to the verification signal, and output, to the processing chip, a second detection result indicating that the identity signal is the same as or different from a historical identity signal.

14. The circuit board according to claim 13, wherein the detection sub-circuit in the identity verification circuit is reused as the detection circuit.

15. The circuit board according to claim 13, wherein the trigger sub-circuit comprises a transistor and a resistor, wherein
a control electrode of the transistor is coupled to the control signal terminal, a first electrode of the transistor is coupled to the power signal terminal, and a second electrode of the transistor is coupled to the battery; and
the resistor is connected in series between the first electrode of the transistor and the power signal terminal, or the resistor is connected in series between the second electrode of the transistor and the battery.

16. An electronic device, comprising:
the battery according to any one of claims 1 to 8; and/or the circuit board according to any one of claims 9 to 15; and
a case, wherein the battery and/or the circuit board is located inside the case.

17. A battery charging method, applied to the electronic device according to claim 16, the electronic device comprising a circuit board, wherein the method comprises:
obtaining, by the detection circuit, a state feature signal provided by the battery, and outputting a first detection result indicating that the state feature signal is a first state feature signal or a second state feature signal;
outputting, by the processing chip, a first charging policy when receiving the first detection result indicating that the state feature signal is the first state feature signal, or outputting, by the processing chip, a second charging policy when receiving the first detection result indicating that the state feature signal is the second state feature signal, wherein a charging voltage corresponding to the first charging policy is greater than a charging voltage corresponding to the second charging policy, and/or a charging current corresponding to the first charging policy is greater than a charging current corresponding to the second charging policy; and
charging, by the charging circuit when receiving the first charging policy, the battery based on the first charging policy; or charging, by the charging circuit when receiving the second charging policy, the battery based on the second charging policy.

18. The method according to claim 17, wherein the electronic device comprises a state switching signal terminal; and the method further comprises:
outputting, by the state switching signal terminal, a state switching signal after the detection circuit obtains the state feature signal provided by the battery, wherein the state feature circuit of the battery switches from a first state to a second state or remains in the second state.

19. The method according to claim 17 or 18, wherein the electronic device comprises an identity verification circuit; after the outputting, by the detection circuit, a first detection result indicating that the state feature signal is a first state feature signal or a second state feature signal, the method further comprises:
outputting, by the identity verification circuit, a verification signal to the battery;
obtaining, by the identity verification circuit, an identity signal provided by the battery in response to the verification signal, and outputting a second detection result indicating that the identity signal is the same as or different from a historical identity signal; and
when the second detection result indicates that the identity signal is the same as the historical identity signal, the outputting, by the processing chip, a second charging policy when receiving the first detection result indicating that the state feature signal is the second state feature signal comprises:
outputting, by the processing chip, a second charging policy, wherein the second charging policy matches a charging count corresponding to the historical identity signal.

20. A battery, comprising:
a battery core; and
a protection board, comprising:
a state feature circuit, coupled to a positive electrode of the battery core, and further coupled to a circuit board, wherein the state feature circuit is in a first state or a second state, and the state feature circuit is configured to: based on a positive electrode signal provided by the positive electrode of the battery core, output, in the first state, a first state feature signal to the circuit board, or output, in the second state, a second state feature signal to the circuit board; and that the state feature circuit is in the first state indicates that a power supply count of the battery is zero; the state feature circuit being in the second state indicates that the power supply count of the battery is greater than or equal to 1; and
the state feature circuit is further coupled to a state switching signal terminal, and the state feature circuit is further configured to switch from the first state to the second state when the state feature circuit is in the first state and obtains a state switching signal provided by the state switching signal terminal, wherein the switching is irreversible.

21. The battery according to claim 20, wherein the state feature circuit comprises a fuse.

22. The battery according to claim 20 or 21, wherein the protection board further comprises:
a state switching circuit, coupled to the state feature circuit and a negative electrode or a ground terminal of the battery core, and further coupled to the circuit board, wherein the state switching circuit comprises the state switching signal terminal, and the state switching circuit is configured to: when receiving an adjustment signal provided by the circuit board, output the state switching signal by using the state switching signal terminal.

23. The battery according to claim 22, wherein the state switching circuit comprises a transistor, wherein a control electrode of the transistor is coupled to the circuit board, a first electrode of the transistor is coupled to the state feature circuit, and a second electrode of the transistor is coupled to the negative electrode or the ground terminal of the battery core.

24. The battery according to claim 20, wherein the protection board further comprises:
an identity feature circuit, coupled to a negative electrode or a ground terminal of the battery core, and further coupled to the circuit board, wherein the identity feature circuit is configured to output an identity signal when receiving a verification signal provided by the circuit board.

25. The battery according to claim 24, wherein the identity feature circuit comprises a resistor, wherein one terminal of the resistor is coupled to the circuit board, and an other terminal of the resistor is coupled to the negative electrode or the ground terminal of the battery core.

26. The battery according to claim 24, wherein the identity feature circuit is connected in series between the state feature circuit and the circuit board; and
the identity feature circuit and the state feature circuit share a same communication pin to be coupled to the circuit board.

27. The battery according to claim 26, comprising a state switching circuit, wherein the identity feature circuit is coupled to the state feature circuit, and
the state switching circuit is further configured to form a path between the identity feature circuit and the negative electrode or the ground terminal of the battery core when receiving an adjustment signal provided by the circuit board.
